(19) Europäisches Patentamt
European Patent Office
Office européen des brevets

(11) **EP 4 351 860 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **22715114.9**

(22) Anmeldetag: **30.03.2022**

(51) Internationale Patentklassifikation (IPC):
**B29C 45/76** *(2006.01)* **B29C 45/77** *(2006.01)*

(52) Gemeinsame Patentklassifikation (CPC):
**B29C 45/76; B29C 45/766; B29C 45/768; B29C 45/77;** B29C 2945/76006; B29C 2945/76257; B29C 2945/76381; B29C 2945/76384; B29C 2945/76458; B29C 2945/76949

(86) Internationale Anmeldenummer:
**PCT/EP2022/058473**

(87) Internationale Veröffentlichungsnummer:
**WO 2022/258239 (15.12.2022 Gazette 2022/50)**

(54) **VERFAHREN ZUR ERMITTLUNG VON ANOMALIEN BEI EINEM ZYKLISCHEN HERSTELLPROZESS**

METHOD FOR DETERMINING ANOMALIES IN A CYCLICAL MANUFACTURING PROCESS

PROCÉDÉ DE DÉTERMINATION DES ANOMALIES DANS UN PROCESSUS CYCLIQUE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2021 EP 21178623**

(43) Veröffentlichungstag der Anmeldung:
**17.04.2024 Patentblatt 2024/16**

(73) Patentinhaber: **Kistler Holding AG 8408 Winterthur (CH)**

(72) Erfinder:
- **HALTMEIER, Sandra 8599 Salmsach (CH)**
- **WAIBEL, Patrick 76287 Rheinstetten (DE)**
- **KAEGI, Jonathan 8608 Bubikon (CH)**
- **PASCHER, Nikola 8057 Zürich (CH)**
- **VACULIK, Robert 78465 Konstanz (DE)**

(56) Entgegenhaltungen:
**DE-C1- 19 801 881**

EP 4 351 860 B1

## Beschreibung

### Technisches Gebiet

Die Erfindung betrifft ein Verfahren zur Ermittlung von Anomalien bei einem zyklischen Herstellprozess nach dem Oberbegriff des unabhängigen Anspruches.

### Stand der Technik

Ein zyklischer Herstellprozess zeichnet sich durch wiederholende Aktivitäten bei der Herstellung von Stückgütern aus. Die Aktivitäten werden in Zyklen vollständig abgearbeitet und danach wiederholt. Durch immergleiche Wiederholung der Aktivitäten lässt sich eine grosse Anzahl identischer Stückgüter herstellen, was die Herstellkosten tief hält. Beispiele für einen zyklischen Herstellprozess sind Verfahren zum Urformen wie Giessen, Spritzgiessen, Sintern, usw. Nachfolgend wird die Erfindung anhand eines Spritzgiessprozesses beschrieben, was die Verwendung der Erfindung in anderen Verfahren zum Urformen nicht ausschliesst.

Bei einem Spritzgiessprozess werden mit einer Spritzgiessmaschine Stückgüter hergestellt. Dazu weist jede Spritzgiessmaschine ein Spritzgiesswerkzeug mit mindestens einer Kavität auf. In die Kavität wird ein Werkstoff unter Druck eingespritzt. Der eingespritzte Werkstoff plastifiziert und nimmt die Form der Kavität an. Der so umgeformte Werkstoff kühlt aus und bildet ein Stückgut. Dabei ist ein Werkzeuginnendruck in der Kavität ein wichtiger Parameter für die Qualität des Stückgutes. Anomalien beim Werkzeuginnendruck, wie ein zu hoher oder zu tiefer Werkzeuginnendruck führt zu Ausschuss beim Spritzgiessprozess, was die Herstellkosten erhöht und zu vermeiden ist.

Die Schrift WO2017/144344A1 offenbart ein Verfahren zur Durchführung eines zyklischen Herstellprozesses, bei dem der Herstellprozess über mindestens eine Prozesseinstellgrösse eingestellt wird und die hergestellten Stückgüter mindestens ein Qualitätsmerkmal erfüllen müssen, um Gutteile zu sein. Vor dem eigentlichen Herstellprozess wird in einer Einstellphase die Prozesseinstellgrösse bewusst geändert, um zu ermitteln, ob mit der geänderten Prozesseinstellgrösse weiterhin Gutteile hergestellt werden. Dazu werden Prozesskenngrössenvarianten automatisiert gemessen. Aus gemessenen Prozesskenngrössenvarianten die zu Gutteilen führen, wird automatisiert eine Prozesskenngrössenzone gebildet. Im nachfolgenden Herstellprozess wird automatisiert ermittelt, ob gemessene Prozesskenngrössen innerhalb der Prozesskenngrössenzone liegen. Solange dies der Fall ist, werden Gutteile hergestellt und eine Qualitätskontrolle der Stückgüter ist nicht mehr nötig.

Die beiden Aufgaben der vorliegenden Erfindung bestehen darin, das aus der Schrift WO2017/144344A1 bekannte Verfahren zur Durchführung eines zyklischen Herstellprozesses zu vereinfachen und zu verbessern.

### Darstellung der Erfindung

Zumindest eine der Aufgaben wird durch die Merkmale des unabhängigen Anspruches gelöst.

Die Erfindung betrifft ein Verfahren zur Ermittlung von Anomalien bei einem zyklischen Herstellprozess; bei dem in einem Zyklus des Herstellungsprozesses ein Stückgut hergestellt wird; und in welchem Zyklus ein Werkzeuginnendruck gemessen wird, wobei bei einer Anomalie des Werkzeuginnendruckes das Stückgut ein Schlechtteil ist; wobei in einem ersten Schritt des Verfahrens für mindestens einen Zyklus mindestens eine zeitliche Folge von Druckwerten bereitgestellt wird; wobei in einem zweiten Schritt des Verfahrens für jede zeitliche Folge von Druckwerten mindestens ein Kennwert automatisch ermittelt wird; wobei in einem dritten Schritt des Verfahrens für mehrere Zyklen der Kennwert in mindestens einem Entscheidungsbaum automatisch partitioniert wird und eine durchschnittliche Tiefe des Entscheidungsbaumes automatisch ermittelt wird; wobei in einem vierten Schritt des Verfahrens in einen weiteren Zyklus eine zeitliche Folge von weiteren Druckwerten bereitgestellt wird; wobei in einem fünften Schritt des Verfahrens für die zeitliche Folge von weiteren Druckwerten mindestens ein weiterer Kennwert automatisch ermittelt wird; wobei in einem sechsten Schritt des Verfahrens der weitere Kennwert in mindestens einem weiteren Entscheidungsbaum automatisch partitioniert wird und eine weitere Tiefe des weiteren Entscheidungsbaumes automatisch ermittelt wird; und wobei in einem siebten Schritt des Verfahrens automatisch ermittelt wird, ob für einen Kennwert und einen weiteren Kennwert mit gleichem Kennwert-Index die weitere Tiefe des weiteren Entscheidungsbaumes geringer als die durchschnittliche Tiefe des Entscheidungsbaumes ist und eine Anomalie beim Werkzeuginnendruck vorliegt.

Erfindungsgemäss werden also keine Prozesskenngrössen variiert, wie Schrift WO2017/144344A1, um eine stabile Prozesskenngrössenzone zu bilden, wo Gutteile hergestellt werden. Vielmehr wird für jeden Zyklus die zeitliche Folge von Druckwerten des Werkzeuginnendruckes auf mindestens einen Kennwert reduziert, welcher Kennwert für mehrere Zyklen in einem Entscheidungsbaum automatisch partitioniert wird. Denn es ist die erfindungsgemässe Annahme, dass ein Schlechtteil von einer Anomalie beim Werkzeuginnendruck stammt und sich im Entscheidungsbaum mit geringer Tiefe rasch partitionieren lässt. Gutteile hingegen ähneln sich von Natur aus viel mehr und weisen dann auch keine Anomalie beim Werkzeuginnendruck auf. Sie lassen sich daher im Entscheidungsbaum nicht so rasch partitionieren, ihr Entscheidungsbaum weist eine vergleichsweise grössere Tiefe auf. Erfindungsgemäss muss somit lediglich die weitere Tiefe eines weiteren Entscheidungsbaumes für einen weiteren Kennwert aus einem aktuellen, weiteren Zyklus mit der durchschnittlichen Tiefe eines Entscheidungsbaumes für den gleichen Kennwert aus mehreren früheren Zyklen verglichen werden, um aus einem Tiefenunterschied auf eine Anomalie beim Werkzeuginnendruck im aktuellen, weiteren Zyklus zu schliessen. Somit ist im aktuellen, weiteren Zyklus keine Qualitätskontrolle des hergestellten Stückgutes nötig, um es als Gutteil oder Schlechtteil zu qualifizieren.

Die Erfindung ist tatsächlich einfacher durchzuführen, als das aus der Schrift WO2017/144344A1 bekannte Verfahren. Denn die Einstellphase der bewussten Änderung einer Prozesseinstellgrösse ist nicht mehr notwendig. Vielmehr wird im dritten Schritt des Verfahrens der Entscheidungsbaum zur Partitionierung des Kennwertes von mehreren Zyklen durch unüberwachtes maschinelles Lernen automatisch ermittelt. Im Sinne der Erfindung hat das Adjektiv "automatisch" die Bedeutung, dass ein Schritt des Verfahrens ohne Mitwirkung einer Person durchgeführt wird. Der dritte Schritt des Verfahrens lässt sich somit zeitgleich mit dem zyklischen Herstellprozess durchführen, was vorteilhaft einfach ist, da Zeit und Aufwand gespart wird.

Weitere Ausbildungen des Erfindungsgegenstandes werden in den abhängigen Ansprüchen beansprucht.

## Kurze Beschreibung der Figuren

Im Folgenden wird die Erfindung beispielhaft anhand der Figuren näher erklärt.

Fig. 1    zeigt ein Flussdiagramm mit mehreren Schritten V1 - V7 des Verfahren zur Ermittlung von Anomalien bei einem zyklischen Herstellprozess;

Fig. 2    zeigt schematisch Komponenten einer Spritzgiessmaschine 1 zur Durchführung des Verfahren gemäss Fig. 1;

Fig. 3    zeigt eine mit der Spritzgiessmaschine 1 gemäss Fig. 2 ermittelte Werkzeuginnendruckkurve Yk, k=1;

Fig. 4    zeigt eine mit der Spritzgiessmaschine 1 gemäss Fig.2 ermittelte Werkzeuginnendruckkurve Yk, k=2 für ein Gutteil G und eine Werkzeuginnendruckkurve Yk, k=3 für ein Schlechtteil S;

Fig. 5    zeigt eine mit der Spritzgiessmaschine 1 gemäss Fig.2 ermittelte Werkzeuginnendruckkurve Yk, k=2 für ein Gutteil G und eine Werkzeuginnendruckkurve Yk, k=4 für ein Schlechtteil S;

Fig. 6    zeigt einen Entscheidungsbaum Bi, i=1...n zur Durchführung des dritten Schrittes V3 des Verfahrens gemäss Fig. 1; und

Fig. 7    zeigt eine mit der Spritzgiessmaschine 1 gemäss Fig. 2 ermittelte weitere Werkzeuginnendruckkurve Y';

Fig. 8    zeigt einen weiteren Entscheidungsbaum Bi', i=1...n zur Durchführung des sechsten Schrittes V6 des Verfahrens gemäss Fig. 1; und

Fig. 9    zeigt eine Korrelationstabelle zwischen mindestens einem im Verfahren gemäss Fig. 1 ermittelten Kennwert Kki, k=1...1 i=1...n und mindestens einer Maschineneinstellgrösse Mh, h=1...r für die Spritzgiessmaschine 1 gemäss Fig. 2.

Gleiche Bezugzeichen bezeichnen in den Figuren gleiche Gegenstände.

## Wege zur Ausführung der Erfindung

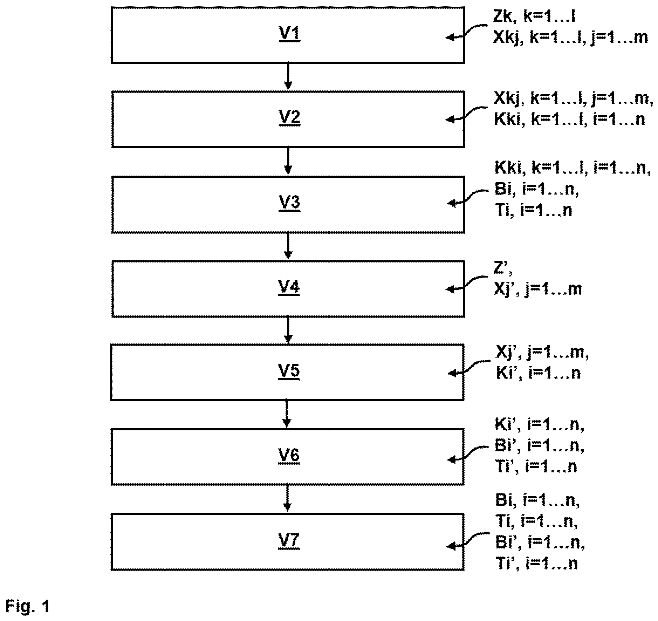

Fig. 1 zeigt ein Flussdiagram mit mehreren Schritten V1 - V7 des Verfahrens zur Ermittlung von Anomalien bei einem zyklischen Herstellprozess.

Der Spritzgiessprozess ist ein zyklischer Herstellprozess mit sich zyklisch wiederholenden Aktivitäten mit einer Vielzahl von Zyklen $Zk$, k=1...1, wobei der Zyklus-Index $j$ die einzelnen Zyklen $Zk$, k=1...1 bezeichnet und die Zyklus-Zahl $I$ die Anzahl der Zyklen $Zk$, k=1...1 bezeichnet. In jedem Zyklus $Zk$, k=1...1 wird ein Stückgut 14 hergestellt und es wird ein Werkzeuginnendruck $P$ gemessen.

In einem ersten Schritt V1 des Verfahrens wird für mindestens einen Zyklus $Zk$, k=1...1 mindestens eine zeitliche Folge von Druckwerten $Xkj$, k=1...1, j=1...m bereitgestellt.

In einem zweiten Schritt V2 des Verfahrens wird für jede zeitliche Folge von Druckwerten $Xkj$, k=1...l, j=1...m mindestens ein Kennwert $Kki$, k=1...1, i=1...n automatisch ermittelt.

In einem dritten Schritt V3 des Verfahrens wird der Kennwert $Kki$, k=1...1, i=1...n in einem Entscheidungsbaum $Bi$, i=1...n automatisch partitioniert und eine durchschnittliche Tiefe $Ti$, i=1...n des Entscheidungsbaumes $Bi$, i=1...n wird automatisch ermittelt.

In einem vierten Schritt V4 des Verfahrens wird in einen weiteren Zyklus $Z'$ eine zeitliche Folge von weiteren Druckwerten $Xj'$, j=1...m bereitgestellt.

In einem fünften Schritt V5 des Verfahrens wird für die zeitliche Folge von weiteren Druckwerten $Xj'$, j=1...m mindestens ein weiterer Kennwert $Ki'$, i=1...n automatisch ermittelt.

In einem sechsten Schritt V6 des Verfahrens wird der weitere Kennwert $Ki'$, i=1...n in einem weiteren Entscheidungsbaum $Bi'$, i=1...n automatisch partitioniert und eine weitere Tiefe $Ti'$, i=1...n des weiteren Entscheidungsbaumes Bi', i=1...n automatisch ermittelt.

In einem siebten Schritt V7 des Verfahrens automatisch ermittelt wird, ob die weitere Tiefe Ti', i=1...n des weiteren Entscheidungsbaumes Bi', i=1...n geringer als die durchschnittliche Tiefe Ti, i=1...n des Entscheidungsbaumes Bi, i=1...n ist und eine Anomalie beim Werkzeuginnendruck P vorliegt.

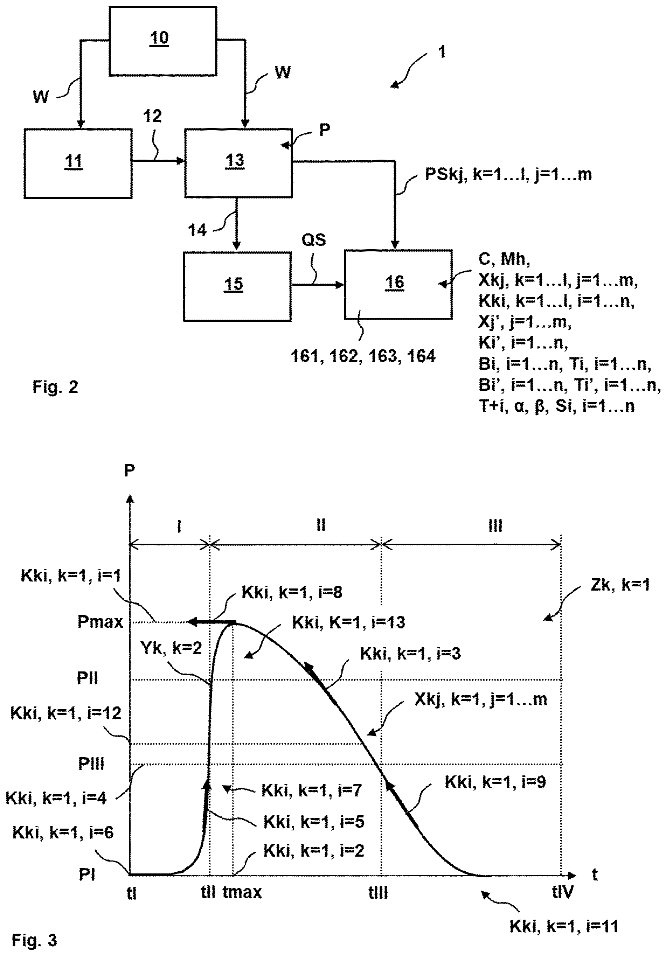

Das Verfahren lässt sich auf einer beliebigen handelsüblichen und dem Fachmann bekannten Spritzgiessmaschine 1 durchführen. Die in Fig. 2 schematisch dargestellte Spritzgiessmaschine 1 weist eine Einspritzvorrichtung 11 auf, in welcher eine Schmelze 12 verflüssigt wird. Die Schmelze 12 kann aus Kunststoff, Metall, Keramik usw. sein. Die Spritzgiessmaschine 1 weist ein Spritzgiesswerkzeug 13 mit einer Kavität auf, in welche die verflüssigte Schmelze 12 von der Einspritzvorrichtung 11 unter Druck eingespritzt wird. Die in die Kavität eingespritzte Schmelze 12 wird in der Kavität zum Erstarren gebracht und kühlt ab. Am Ende des Herstellprozesses wird ein fertiges Stückgut 14 aus der Kavität ausgestossen.

In der Kavität ist mindestens ein Drucksensor angeordnet, welcher einen zeitlichen Verlauf eines Werkzeuginnendruckes P der Kavität misst. Der Drucksensor ist beispielsweise ein piezoelektrischer Drucksensor, der für den gemessenen zeitlichen Verlauf des Werkzeuginnendruckes P eine zeitliche Folge von Drucksignalen $PS_{kj}$, k=1...1, j=1...m erzeugt, wobei der Signal-Index j die einzelnen Drucksignale $PS_{kj}$, k=1...1, j=1...m bezeichnet und die Signal-Zahl m die Anzahl der Drucksignale $PS_{kj}$, k=1...l, j=1...m bezeichnet. Die Drucksignale $PS_{kj}$, k=1...1, j=1...m folgen sich in Zeitpunkten tj, j=1...m zeitlich aufeinander und sie sind in einem konstanten zeitlichen Abstand zueinander. Der piezoelektrische Kraftaufnehmer misst den Werkzeuginnendruck P als elektrische Polarisationsladungen. Jedes Drucksignal $PS_{kj}$, k=1...1, j=1...m ist eine Menge der elektrischen Polarisationsladungen zu einem Zeitpunkt tj, j=1...m. Die Menge der elektrischen Polarisationsladungen ist proportional zur Grösse des Werkzeuginnendruckes P. Der piezoelektrische Kraftaufnehmer misst den Werkzeuginnendruck P misst den Werkzeuginnendruck P typischerweise mit einer Messgenauigkeit von 1%, d.h. ein Werkzeuginnendruck P von 200bar wird mit einer Messgenauigkeit von +/-2bar gemessen. Der piezoelektrische Kraftaufnehmer misst den Werkzeuginnendruck P mit einer zeitlichen Auflösung von kleiner/gleich 0.01Hz. D.h. pro Zeiteinheit von 1sec misst der piezoelektrische Kraftaufnehmer den Werkzeuginnendruck P mindestens 100Mal. Für einen Spritzgiessprozess mit einer typischen Zyklusdauer von 10sec misst der piezoelektrische Kraftaufnehmer die Werkzeuginnendruck P somit mindestens 1000Mal und erzeugt eine zeitliche Folge von mindestens 1000 Drucksignalen $PS_{kj}$, k=1...l, j=1...m.

Die Spritzgiessmaschine 1 weist eine Qualitätskontrolleinheit 15 auf, welche kontrolliert, ob das hergestellte Stückgut 14 mindestens ein vordefiniertes Qualitätsmerkmal erfüllt. Das vordefinierte Qualitätsmerkmal ist ein Gewicht, eine Masshaltigkeit, eine Grösse, eine Gratbildung, eine Kavitätsfüllung, eine Brandstelle, usw. Wenn das hergestellte Stückgut 14 das vordefinierte Qualitätsmerkmal erfüllt, liegt ein Gutteil G vor. Wenn das produzierte Stückgut 14 das Qualitätsmerkmal nicht erfüllt, liegt ein Schlechtteil S vor. Die Qualitätskontrolleinheit 15 erzeugt für die als Gutteil G oder Schlechtteil S kontrollierten Stückgüter 14 Qualitätssignale QS.

Das Spritzgiesswerkzeug 13 weist eine Auswerteeinheit 16, welche mindestens eine Wandlereinheit 161, mindestens einen Computer 162, mindestens einer Eingabeeinheit 163 und mindestens einer Ausgabeeinheit 164 auf.

Die Auswerteeinheit 16 ist über Signalleitungen mit dem Spritzgiesswerkzeug 13 und der Qualitätskontrolleinheit 15 verbunden. Über die Signalleitungen empfängt die Auswerteeinheit 16 vom Spritzgiesswerkzeug 13 zeitliche Folgen von Druck-Messsignalen $PS_{kj}$, k=1...1, j=1...m. Und über die Signalleitungen empfängt die Auswerteeinheit 16 von der Qualitätskontrolleinheit 15 Qualitätssignale QS.

Zur Durchführung des ersten Schrittes V1 des Verfahrens erzeugt der piezoelektrische Drucksensor eine zeitliche Folge von Drucksignalen $PS_{kj}$, k=1...l, j=1...m in Form von elektrischen Polarisationsladungen. Vorzugsweise weist die Wandlereinheit 161 einen Ladungsverstärker auf. Der Ladungsverstärker wandelt für jedes Drucksignal $PS_{kj}$, k=1...l, j=1...m die Menge der elektrischen Polarisationsladungen in einen Betrag einer elektrischen Spannung. Daraufhin digitalisiert die Wandlereinheit 161 für jedes Drucksignal $PS_{kj}$, k=1...1, j=1...m den Betrag der elektrischen Spannung in einen Wert des Werkzeuginnendruckes P. Somit wandelt die Wandlereinheit 161 die zeitliche Folge von Drucksignalen $PS_{kj}$, k=1...1, j=1...m automatisch in eine zeitliche Folge von Druckwerten $X_{kj}$, k=1...1, j=1...m.

Der Computer 162 weist mindestens einen Datenprozessor und mindestens einen Datenspeicher auf. Mindestens ein Computerprogramm C ist im Datenspeicher gespeichert und in den Datenprozessor ladbar. Das in den Datenprozessor geladene Computerprogramm C veranlasst den Computer 162 mindestens einen Schritt des Verfahrens durchzuführen. Der Computer 162 führt den Schritt des Verfahrens automatisch durch. Dazu erzeugt das Computerprogramm C Befehle.

Der Computer 162 ist über die Eingabeeinheit 163 bedienbar. Die Eingabeeinheit 163 kann eine Tastatur sein, zur Eingabe von Befehlen. Im Sinne der Erfindung bedeutet das Verb "Bedienen", dass der Computer 162 von einer Person über die Eingabeeinheit 163 mit Befehlen gestartet, gesteuert und ausgeschaltet wird. Die Person ist ein Mensch. Die Person ist ausgebildet die Spritzgiessmaschine 1 zu bedienen. Die Ausgabeeinheit 164 kann ein Bildschirm sein, auf dem digitale Daten graphisch darstellbar sind.

Das in den Datenprozessor geladene Computerprogramm C befiehlt dem Computer 162 eine zeitliche Folge von Druckwerten $X_{kj}$, k=1, j=1...m des Zyklus Zk, k=1 in den Datenprozessor zu laden und die geladenen Druckwerte Xkj, k=1, j=1...m auf der Ausgabeeinheit 164 als Werkzeuginnendruckkurve Yk, k=1 graphisch darzustellen, was in Fig. 3 zu sehen. Die graphische Darstellung weist eine Ordinate und eine Abszisse auf. Die Ordinate bezeichnet den Werkzeuginnendruck P, die Ordinate bezeichnet die Zeit t. Die Zeiten tI bis tIV und Werkzeuginnendrücke PI bis PIII und Pmax gelten für die Werkzeuginnendruckkurve Yk, k=1. Das Spritzgiesswerkzeug 13 kann mehrere Kavitäten haben und für jede Kavität kann eine spezifische Werkzeuginnendruckkurve Yk, k=1 existieren.

Jeder Zyklus Zk, k=1...l weist Phasen I bis III auf, somit auch der in Fig. 3 dargestellte Zyklus Zk, k=1. Eine Einspritzphase I beginnt zu einem Zeitpunkt tI mit einem initialen Werkzeuginnendruck PI und endet an einem Zeitpunkt tII mit einem Fülldruck PII. In der Einspritzphase I wird durch eine Translationsbewegung einer Schnecke Schmelze 12 verflüssigt und gegen eine Düse bewegt. Die verflüssigte Schmelze 12 wird durch die Düse in die Kavität eingespritzt. Dazu weist die Spritzgiessmaschine 1 eine Steuereinrichtung 10 auf, um das Verflüssigen und Einspritzen der Schmelze 12 in die Kavität zu steuern. Mit der Steuereinrichtung 10 lässt sich mindestens eine Maschineneinstellgrösse Mh, h=1...r wie eine Dosiergeschwindigkeit der Schnecke, eine Einspritzgeschwindigkeit der Schmelze in die Kavität, ein Umschaltzeitpunkt tII, eine Entlastungsbewegung der Schnecke, eine Temperatur der Schmelze, eine Temperatur des Werkzeuges, usw. verändern. Der Maschineneinstellgrösse-Index h bezeichnet die einzelnen Maschineneinstellgrössen Mh, h=1...r und die Maschineneinstellgrösse-Zahl r bezeichnet die Anzahl der Maschineneinstellgrössen Mhi, h=1...r. Dazu weist die Steuereinrichtung 10 eine Eingabevorrichtung auf, um die Maschineneinstellgrösse Mh, h=1...r einzugeben. Je höher die Einspritzgeschwindigkeit ist, desto rascher wird die Kavität mit Schmelze gefüllt. Beim Füllen der Kavität mit Schmelze 12 steigt der Werkzeuginnendruck P in einer kurzen Zeitspanne auf einen maximalen Werkzeuginnendruck Pmax. Kurz vor Erfassen des maximalen Werkzeuginnendruckes Pmax ist die Kavität vollständig mit Schmelze 12 gefüllt und der Fülldruck PII wird gemessen. Der Zeitpunkt tII, an dem die Kavität vollständig mit Schmelze gefüllt ist, wird Umschaltzeitpunkt tII genannt. Die Einspritzphase I ist beendet.

Zum Umschaltzeitpunkt tII wird die Spritzgiessmaschine 1 von der Einspritzgeschwindigkeit als Maschineneinstellgrösse Mh, h=1...r auf einen Nachdruck als Maschineneinstellgrösse Mh, h=1...r umgeschaltet, die Nachdruckphase II beginnt. In der Nachdruckphase II übt die Einspritzvorrichtung 11 an der Düse einen Nachdruck auf die Schmelze 12 in der Kavität aus. Auch wird Schwindung der abkühlenden Schmelze 12 kompensiert, in dem weitere Schmelze 12 in die Kavität fliesst. Dabei wird von der Steuereinrichtung 10 der Werkzeuginnendruck P auf einen Siegelpunktdruck PIII erniedrigt. Die Schmelze 12 wird in der Kavität zum Erstarren gebracht und kühlt dabei ab. Die Nachdruckphase II beginnt zum Zeitpunkt tII und endet an einem Zeitpunkt tIII mit dem Siegelpunktdruck PIII. Mit der Steuereinrichtung 10 lassen sich als Maschinenparameter M die Nachdruckhöhe und eine Nachdruckzeit verändern. Die Nachdruckhöhe beeinflusst eine Höhe des Werkzeuginnendruckes P besonders im Bereich des maximalen Werkzeuginnendruckes Pmax, wo die Schmelze 12 kurzzeitig komprimiert ist und der Werkzeuginnendruck P grösser als der Fülldruck PII ist. Die Nachdruckzeit beeinflusst die Geschwindigkeit, mit welcher der Werkzeuginnendruck P abfällt.

Zum Zeitpunkt tIII beginnt die Restkühlphase III, die erstarrte Schmelze 12 kühlt weiter ab. Der Zeitpunkt tIII wird auch Siegelpunkt tIII genannt, zu dem die Schmelze 12 im Bereich der Düse so weit erstarrt ist, dass keine Schmelze 12 mehr in die Kavität fliessen kann, die Düse der Kavität ist versiegelt. Das Spritzgiesswerkzeug 13 ist über Kühlmittel kühlbar. Mit der Steuereinrichtung 10 lässt sich als Maschinenparameter M eine Werkzeugtemperatur verändern, die Kavität wird somit in der Nachdruckphase II und in der Restkühlphase III mehr oder weniger stark gekühlt. Die Restkühlphase III endet zum Zeitpunkt tIV, an dem das fertige Stückgut 14 aus der Kavität ausgestossen wird.

Das in den Datenprozessor geladene Computerprogramm C veranlasst den Computer 162 den zweiten Schritt V2 des Verfahrens durchzuführen. Dazu befiehlt das Computerprogramm C dem Computer 162 für den Zyklus Zk, k=1 die zeitliche Folge von Druckwerten Xkj, k=1, j=1...m in den Datenprozessor zu laden. Nun befiehlt das Computerprogramm C dem Computer 162 für die zeitliche Folge von Druckwerten Xkj, k=1, j=1...m mindestens einen Kennwert Kki, k=1, i=1...n automatisch zu ermitteln. Der Kennwert-Index i bezeichnet die einzelnen Kennwerte Kki, k=1, i=1...n und die Kennwert-Zahl n bezeichnet die Anzahl der Kennwerte Kki, k=1, i=1...n.

Ein erster Kennwert Kki, k=1, i=1 ist der maximale Werkzeuginnendruck Pmax der Werkzeuginnendruckkurve Yk, k=1.

Ein zweiter Kennwert Kki, k=1, i=2 ist der Zeitpunkt tmax des maximalen Werkzeuginnendruckes Pmax der Werkzeuginnendruckkurve Yk, k=1.

Ein dritter Kennwert Kki, k=1, i=3 ist der Gradient des in der Nachdruckphase II abfallenden Werkzeuginnendruckes P. Der Gradient ist eine partielle Ableitung in einem Druckwerten Xkj, k=1, j=1...m der Nachdruckphase II und zeigt deshalb in Richtung der grössten Änderung. In Fig. 3 ist der dritte Kennwert Kki, k=1, i=3 auf der Werkzeuginnendruckkurve Yk, k=1 als Pfeil der Nachdruckphase II in Richtung des maximalen Werkzeuginnendruckes Pmax dargestellt.

Ein vierter Kennwert Kki, k=1, i=4 ist der Fülldruck PII auf der Werkzeuginnendruckkurve Yk, k=1 in der Einspritzphase I.

Ein fünfter Kennwert Kki, k=1, i=5 ist der Gradient des in der Einspritzphase I bis zum Umschaltzeitpunkt tII ansteigenden Werkzeuginnendruckes P. Der Gradient ist eine partielle Ableitung in einem Druckwerten Xkj, k=1, j=1...m der Einspritzphase I und zeigt deshalb in Richtung der grössten Änderung. In Fig. 3 ist der fünfte Kennwert Kki, k=1, i=5 auf der Werkzeuginnendruckkurve Yk, k=1 als Pfeil der Einspritzphase I in Richtung des maximalen Werkzeuginnendruckes Pmax dargestellt.

Ein sechster Kennwert Kki, k=1, i=6 ist der Zeitpunkt tI mit dem die Einspritzphase I beginnt.

Ein siebter Kennwert Kki, k=1, i=7 ist das Integral der Werkzeuginnendruckkurve Yk, k=1 zwischen dem Zeitpunkt tI mit dem die Einspritzphase I beginnt und dem Zeitpunkt tmax des maximalen Werkzeuginnendruckes Pmax.

Ein achter Kennwert Kki, k=1, i=8 ist der Gradient beim maximalen Werkzeuginnendruck Pmax. Der Gradient ist eine partielle Ableitung und zeigt in Richtung der grössten Änderung. In Fig. 3 ist der achte Kennwert Kki, k=1, i=8 auf der Werkzeuginnendruckkurve Yk, k=1 als waagrechter Pfeil im maximalen Werkzeuginnendruck Pmax dargestellt.

Ein neuner Kennwert Kki, k=1, i=9 ist der Gradient des in der Restkühlphase III abfallenden Werkzeuginnendruckes P. Der Gradient ist eine partielle Ableitung in einem Druckwerten Xkj, k=1, j=1...m der Restkühlphase III und zeigt deshalb in Richtung der grössten Änderung. In Fig. 3 ist der neunte Kennwert Kki, k=1, i=9 auf der Werkzeuginnendruckkurve Yk, k=1 als Pfeil der Restkühlphase III in Richtung des maximalen Werkzeuginnendruckes Pmax dargestellt.

Ein zehner Kennwert Kki, k=1, i=10 ist der Zeitpunkt tIV des Endes der Restkühlphase III.

Ein elfter Kennwert Kki, k=1, i=11 ist die Zeitdauer (tIV-tI) des Zyklus Zk, k=1.

Ein zwölfter Kennwert Kki, k=1, i=12 ist ein mittlerer Werkzeuginnendruck Pm des Zyklus Zk, k=1. Der mittlere Werkzeuginnendruck Pm ist das arithmetische Mittel der Druckwerte Xkj, k=1, j=1...m des Zyklus Zk, k=1.

Ein dreizehnter Kennwert Kki, k=1, i=13 ist ein Integral des Werkzeuginnendruckes P über die Zeitdauer (tIV-tI) des Zyklus Zk, k=1.

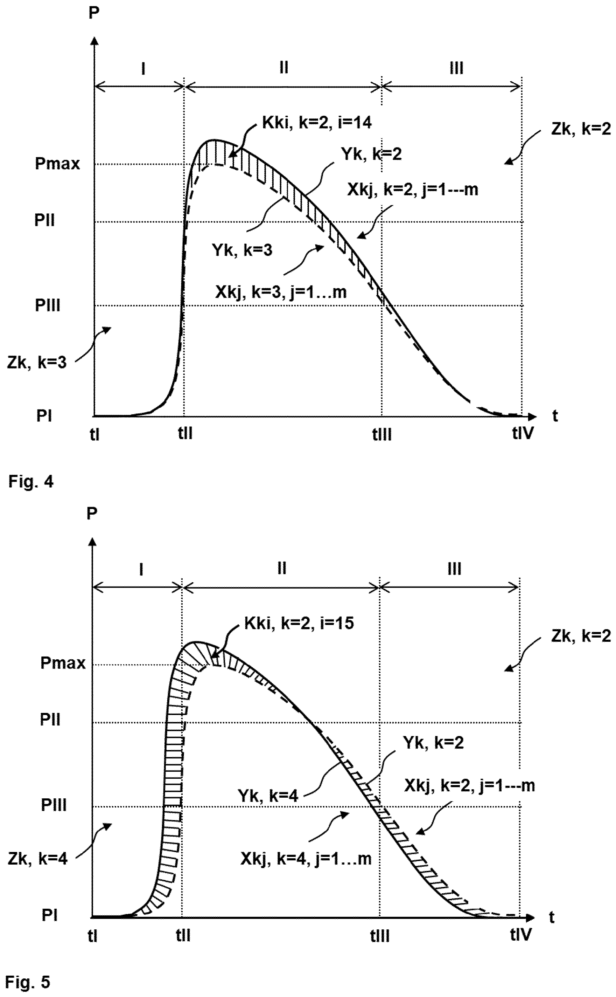

Fig. 4 zeigt eine Werkzeuginnendruckkurve Yk, k=2 für ein Gutteil G und eine Werkzeuginnendruckkurve Yk, k=3 für ein Schlechtteil S. Zur Unterscheidung der beiden Kurven ist die Werkzeuginnendruckkurve Yk, k=2 gestrichelt dargestellt, während die Werkzeuginnendruckkurve Yk, k=3 mit einer durchgezogenen Linie dargestellt ist.

Die Werkzeuginnendruckkurve Yk, k=2 stammt von einer im Zyklus Zk, k=2 vom piezoelektrischen Drucksensor erzeugten zeitlichen Folge von Drucksignalen PSkj, k=2, j=1...m, die von der Wandlereinheit 161 in eine zeitliche Folge von Druckwerten XGkj, k=2, j=1...m gewandelt worden ist. Die Werkzeuginnendruckkurve Yk, k=3 stammt von einer im Zyklus Zk, k=3 vom piezoelektrischen Drucksensor erzeugten zeitlichen Folge von Drucksignalen PSkj, k=3, j=1...m, die von der Wandlereinheit 161 in eine zeitliche Folge von Druckwerten XGkj, k=3, j=1...m gewandelt worden ist.

Das in den Datenprozessor geladene Computerprogramm C befiehlt dem Computer 162 für den Zyklus Zk, k=2 und den Zyklus Zk, k=3 die zeitlichen Folgen von Druckwerten Xkj, k=2, j=1...m und Xkj, k=3, j=1...m in den Datenprozessor zu laden. Nun befiehlt das Computerprogramm C dem Computer 162 für die zeitliche Folge von Druckwerten Xkj, k=2, j=1...m mindestens einen Kennwert Kki, k=2, i=1...n automatisch zu ermitteln.

Ein vierzehnter Kennwert Kki, k=2, i=14 ist eine Summe aller drucknormierten Abstände zwischen Druckwerten Xkj, k=2, j=1...m des Zyklus Zk, k=2 mit einem Gutteil G und Druckwerten Xkj, k=3, j=1...m des Zyklus Zk, k=3 mit einem Schlechtteil S. Im Sinne der Erfindung bedeutet das Adjektiv "drucknormiert", dass der Druckwert Xkj, k=2, j=1...m des Zyklus Zk, k=2 als Referenz genommen wird. Jeder drucknormierte Abstand ist eine gerade Linie parallel zur Ordinate zwischen dem als Referenz genommenen Druckwert Xkj, k=2, j=1...m des Zyklus Zk, k=2 und einem Druckwert Xkj, k=3, j=1...m des Zyklus Zk, k=3. Die drucknormierten Abstände zwischen Druckwerten Xkj, k=2, j=1...m des Zyklus Zk, k=2 und Druckwerten Xkj, k=3, j=1...m des Zyklus Zk, k=3 sind in Fig. 4 dargestellt.

Fig. 5 zeigt eine Werkzeuginnendruckkurve Yk, k=2 für ein Gutteil G und eine Werkzeuginnendruckkurve Yk, k=4 für ein Schlechtteil S. Zur Unterscheidung der beiden Kurven ist die Werkzeuginnendruckkurve Yk, k=2 gestrichelt dargestellt, während die Werkzeuginnendruckkurve Yk, k=4 mit einer durchgezogenen Linie dargestellt ist.

Die Werkzeuginnendruckkurve Yk, k=2 stammt von einer im Zyklus Zk, k=2 vom piezoelektrischen Drucksensor erzeugten zeitlichen Folge von Drucksignalen PSkj, k=2, j=1...m, die von der Wandlereinheit 161 in eine zeitliche Folge von Druckwerten XGkj, k=2, j=1...m gewandelt worden ist. Die Werkzeuginnendruckkurve Yk, k=4 stammt von einer im Zyklus Zk, k=4 vom piezoelektrischen Drucksensor erzeugten zeitlichen Folge von Drucksignalen PSkj, k=4, j=1...m, die von der Wandlereinheit 161 in eine zeitliche Folge von Druckwerten XGkj, k=4, j=1...m gewandelt worden ist.

Das in den Datenprozessor geladene Computerprogramm C befiehlt dem Computer 162 für den Zyklus Zk, k=2 und den Zyklus Zk, k=4 die zeitlichen Folgen von Druckwerten Xkj, k=2, j=1...m und Xkj, k=4, j=1...m in den Datenprozessor zu laden. Nun befiehlt das Computerprogramm C dem Computer 162 für die zeitliche Folge von Druckwerten Xkj, k=2, j=1...m mindestens einen Kennwert Kki, k=2, i=1...n automatisch zu ermitteln.

Ein fünfzehnter Kennwert Kki, k=2, i=15 m ist eine Summe aller zeitnormierten Abstände zwischen Druckwerten Xkj, k=2, j=1...m des Zyklus Zk, k=2 mit einem Gutteil S und Druckwerten Xkj, k=4, j=1...m des Zyklus Zk, k=4 mit einem Schlechtteil S. Im Sinne der Erfindung bedeutet das Adjektiv "zeitnormiert", dass zwei Druckwerte Xkj, k=2, j=1...m des Zyklus Zk, k=2 und Xkj, k=4, j=1...m des Zyklus Zk, k=4, die den gleichen zeitlichen Abstand zum Zeitpunkt tl haben, mit dem die Einspritzphase I beginnt, zueinander in Beziehung zueinander gesetzt werden. Der zeitnormierte Abstand ist eine gerade Linie zwischen dem Druckwert Xkj, k=2, j=1...m des Zyklus Zk, k=2 und dem zeitlich mit ihm in Beziehung gesetzten Druckwert Xkj, k=4, j=1...m des Zyklus Zk, k=4. Die zeitnormierten Abstände zwischen Druckwerten Xkj, k=2, j=1...m des Zyklus Zk, k=2 und Druckwerten Xkj, k=4, j=1...m des Zyklus Zk, k=4 sind in Fig. 5 dargestellt.

Bei Kenntnis der vorliegenden Erfindung kann der Fachmann weitere, hier nicht beschriebene Kennwerte verwenden.

Somit wird für jeden Zyklus Zk, k=1...l die zeitliche Folge von Druckwerten Xkj, k=1...l, j=1...m auf mindestens einen Kennwert Kki, k=1...1, i=1...n reduziert.

Das Computerprogramm C befiehlt dem Computer 162 für jeden Zyklus Zk, k=1...1 die Werkzeuginnendruckkurve Yk, k=1...1 im Datenspeicher abzuspeichern.

Das Computerprogramm C befiehlt dem Computer 162 den ermittelten Kennwert Kki, k=1...1, i=1...n im Datenspeicher abzuspeichern.

Das in den Datenprozessor geladene Computerprogramm C veranlasst den Computer 162 den dritten Schritt V3 des Verfahrens durchzuführen. Das Computerprogramm C befiehlt dem Computer 162 für mehrere Zyklen Zk, k=1...1 den mindestens einen Kennwert Kki, k=1...1, i=1...n in mindestens einem Entscheidungsbaum Bi, i=1...n automatisch zu partitionieren und eine durchschnittliche Tiefe Ti, i=1...n des Entscheidungsbaumes Bi, i=1...n automatisch zu ermitteln. Im Sinne der Erfindung bedeutet der Begriff "partitionieren" eine vollständige Vereinzelung des Kennwert Kki, k=1...1, i=1...n der mehreren Zyklen Zk, k=1...1 in Blättern B4i, i=1...n des Entscheidungsbaumes Bi, i=1...n.

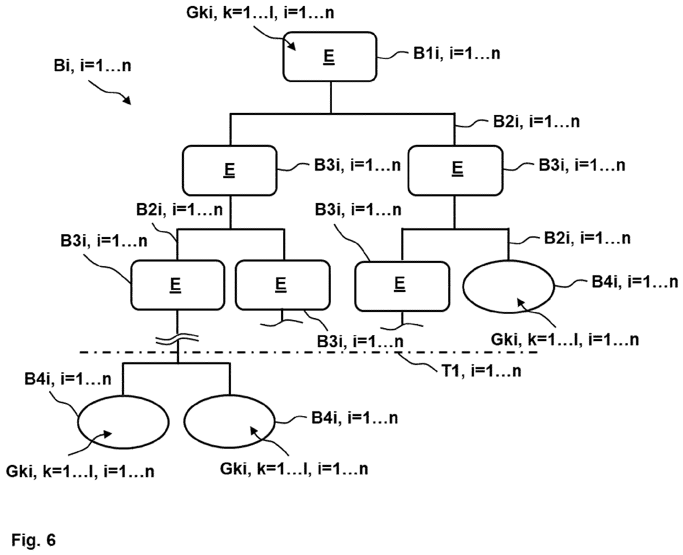

Vorzugsweise erfolgt die Partitionierung des Kennwertes Kki, k=1...1, i=1...n) durch unüberwachtes maschinelles Lernen mit dem Entscheidungsbaum Bi, i=1...n zur graphischen Darstellung von hierarchisch aufeinanderfolgenden Entscheidungen. Das Adjektiv "unüberwacht" besagt, dass die für die Entscheidung notwendigen Entscheidungsregeln vom Computer 162 zufällig getroffen werden und nicht im Voraus ausformuliert sind. Fig. 6 zeigt einen Entscheidungsbaum Bi, i=1...n mit einem Wurzelknoten B1i, i=1...n, mehreren Pfaden B2i, i=1...n, mehreren innere Knoten B3i, i=1...n, und mehreren Blättern B4i, i=1...n. Vorzugsweise ist der Entscheidungsbaum Bi, i=1...n ein binärer Baum, wo vom Wurzelknoten B1i, i=1...n zwei Pfade B2i, i=1...n zu zwei inneren Knoten B3i, i=1...n führen. Der Wurzelknoten B1i, i=1...n befindet sich auf einer ersten Ebene des Entscheidungsbaumes Bi, i=1...n, die inneren Knoten B3i, i=1...n befinden sich auf einer zweiten Ebene des Entscheidungsbaumes Bi, i=1...n. Von jedem inneren Knoten B3i, i=1...n führen zwei weitere Pfade B2i, i=1...n zu mindestens einem weiteren inneren Knoten B3i, i=1...n oder zu mindestens einem Blatt B4i, i=1...n auf weiteren Ebenen des Entscheidungsbaumes Bi, i=1...n.

Das Computerprogramm C befiehlt dem Computer 162 für mehrere Zyklen Zk, k=1...1 mindestens einen Kennwert Kkj, k=1...1, i=1...n in den Datenprozessor zu laden. Der Computer gibt den Kennwert Kki, k=1...l, i=1...n der mehreren Zyklen Zk, k=1...l auf einer ersten Ebene in den Wurzelknoten B1i, i=1...n ein. Das Computerprogramm C befiehlt dem Computer 162 mindestens eine zufällige Entscheidungsregel E wie "grösser als", "kleiner als", "früher als", "später als", usw. auf den Kennwert Kki, k=1...1, i=1...n der mehreren Zyklen Zk, k=1...1 im Wurzelknoten B1i, i=1...n anzuwenden. Mit der Entscheidungsregel E wird der Kennwert Kki, k=1...1, i=1...n der mehreren Zyklen Zk, k=1...1 partitioniert. Die Anwendung der Entscheidungsregel E führt zu einer Entscheidung mit zwei Antworten. Gemäss Fig. 6 sind die Antworten zwei innere Knoten B31, i=1...n unterhalb des Wurzelknotens B1i, i=1...n. Da die Antworten weitere innere Knoten B31, i=1 sind, befiehlt das Computerprogramm C dem Computer 162 ein weiteres Entscheidungskriterium E auf den Kennwert Kki, k=1...1, i=1...n in den inneren Knoten B31, i=1...n anzuwenden und den Entscheidungsbaum rekursiv weiterzuführen. Wenn die Antwort ein Blatt B41, i=1...n ist, ist der Kennwert Kki, k=1...1, i=1 partitioniert.

Nachfolgend wird der dritten Schritt V3 des Verfahrens beispielsweise erläutert. So wird für eine Zyklus-Zahl l=1000 der erste Kennwert Kki, k=1...l000, i=1 1000mal in den Entscheidungsbaum Bi, i=1...n eingegeben. Es liegen also 1000 erste Kennwerte Kki, k=1...l000, i=1 vor. Jeder erste Kennwert Kki, k=1...l000, i=1 ist ein maximaler Werkzeuginnendruck Pmax, der zu einem Zeitpunkt tmax mit einer zeitlichen Auflösung von 0.1Hz und einer Messgenauigkeit von 1% gemessen worden ist. Für jeden Für jeden Zyklus Zk, i=1...1000 existiert ein Zwilling, der aus dem maximalen Werkzeuginnendruck Pmax und dem Zeitpunkt tmax besteht. Nun wird die Entscheidungsregel E auf die 1000 Zwillinge angewendet und die 1000 Zwillinge werden in 1000 Blätter B4i, i=1...n partitioniert. Die 1000 Zwillinge werden vollständig vereinzelt. Jedes Blatt B4i, i=1...n enthält einen Zwilling mit dem ersten Kennwert Kki, k=1...l000, i=1.

Das Computerprogramm C befiehlt dem Computer 162 eine durchschnittliche Tiefe Ti, i=1...n des Entscheidungsbaumes Bi, i=1...n zu ermitteln. Dazu ermittelt der Computer 162 ein arithmetisches Mittel der Anzahl der Ebenen des Entscheidungsbaumes Bi, i=1...n und gibt es als durchschnittliche Tiefe Ti, i=1...n des Entscheidungsbaumes Bi, i=1...n aus. Die durchschnittliche Tiefe Ti, i=1...n ist in Fig. 6 als strichpunktierte Linie dargestellt. Unter der erfindungsgemässen Annahme dass eine Anomalie des Werkzeuginnendruckes P rasch zu partitionieren ist, weist eine Anomalie eine geringere Tiefe als die durchschnittliche Tiefe Ti, i=1...n auf.

Gemäss Fig. 6 ist ein Kennwert Kki, k=1...1, i=1...n in einem Blatt B41, i=1 der dritten Ebene partitioniert, die Tiefe dieses Blattes B41, i=1 ist geringer als die durchschnittliche Tiefe Ti, i=1...n, woraus folgt, dass der Zyklus Zk, k=1...1 aus dem der Kki, k=1...1, i=1...n in diesem Blatt B41, i=1 der dritten Ebene stammt, eine Anomalie des Werkzeuginnendruckes P aufweist.

Vorzugsweise wird ein ganzer Wald mit vielen Entscheidungsbäumen Bi, i=1...n ermittelt. Durch Regression lernt ein verstärkter Entscheidungsbaum von früheren Entscheidungsbäumen. Die früheren Entscheidungsbäume sind schwache Entscheidungsbäume, die den Kennwert Kki, k=1...l, i=1...n gar nicht vereinzeln konnten, oder es sind starke Entscheidungsbäume, die den Kennwert Kki, k=1...1, i=1...n unvollständig vereinzeln konnten. Erst eine vollständige Vereinzelung, wo jeder Kennwert Kki, k=1...l, i=1...n in einem Blatt B4i, i=1...n partitioniert ist, ist eine sehr gute Partitionierung. Das Computerprogramm C befiehlt dem Computer 162 durch gezielte Selektion und Kombination der starken Entscheidungsbäume Bi, i=1...n einen verstärkten Entscheidungsbaum Bi, i=1...n zu ermitteln. Die regressive Ermittlung des verstärkten Entscheidungsbaumes Bi, i=1...n wird in einer grossen Zykluszahl I von Zyklen Zk, k=1...1 solange fortgesetzt, bis eine vollständige Vereinzelung des Kennwertes Kki, k=1...1, i=1...n vorliegt.

Vorzugsweise werden mehrere Kennwerte Kki, k=1...l, i=1...n partitioniert. Dadurch wird die Güte der Partitionierung verbessert. Im Sinne der Erfindung bezeichnet der Begriff "Güte" die Wahrscheinlichkeit bezeichnet, mit der die Partitionierung des Kennwertes Kki, k=1...1, i=1...n tatsächlich auch ein Gutteil G von einem Schlechtteil S unterscheidet.

Auch die Partitionierung von mehreren Kennwerte Kki, k=1...1, i=1...n wird beispielsweise erläutert. So mag die Vereinzelung der 1000 ersten Kennwerte Kki, k=1...l000, i=1 im Entscheidungsbaum Bi, i=1...n unvollständig gewesen sein. Deshalb werden in einem verstärkten Entscheidungsbaum Bi, i=1...n 1000mal der erste Kennwert Kki, k=1...1000, i=1 und 1000mal der dritte Kennwert Kki, k=1...1000, i=3 automatisch partitioniert. Jeder erste Kennwert Kki, k=1...l000, i=1 ist ein maximaler Werkzeuginnendruck Pmax, der zu einem Zeitpunkt tmax gemessen worden ist. Jeder dritte Kennwert Kki, k=1...1000, i=3 ist der Gradient des in der Nachdruckphase II abfallenden Werkzeuginnendruckes P. Für jeden Zyklus Zk, i=1...1000 existiert ein Drilling, der aus dem maximalen Werkzeuginnendruck Pmax, dem Zeitpunkt tmax und dem Gradienten des in der Nachdruckphase II abfallenden Werkzeuginnendruckes P besteht. Durch Anwendung der Entscheidungsregel E werden die 1000 Drillinge in 1000 Blätter B4i, i=1...n partitioniert. Die 1000 Drillinge werden vollständig vereinzelt, jedes Blatt B4i, i=1...n enthält einen Drilling mit dem ersten Kennwert Kki, k=1...1000, i=1 und mit dem dritten Kennwert Kki, k=1...1000, i=3.

Das Computerprogramm C befiehlt dem Computer 162 den Entscheidungsbaum Bi, i=1...n mit dem für mehrere Zyklen Zk, k=1...1 partitionierten Kennwert Kki, k=1...1, i=1...n und die durchschnittliche Tiefe Ti, i=1...n im Datenspeicher abzuspeichern.

Im vierten Schritt V4 des Verfahrens erzeugt der piezoelektrische Drucksensor in einem weiteren Zyklus Z' eine zeitlichen Folge von weiteren Drucksignalen PSj', j=1...m, die von der Wandlereinheit 161 in eine zeitliche Folge von weiteren Druckwerten Xj', j=1...m gewandelt wird.

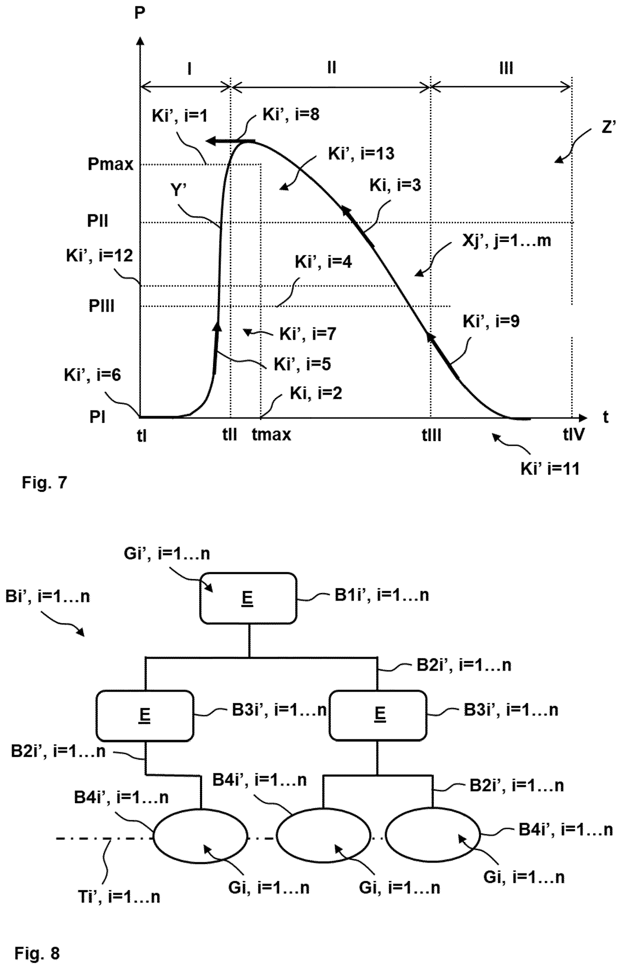

Das in den Datenprozessor geladene Computerprogramm C veranlasst den Computer 162 den fünften Schritt V5 des Verfahrens durchzuführen. Dazu befiehlt das Computerprogramm C dem Computer 162 für den weiteren Zyklus Z' die zeitliche Folge von weiteren Druckwerten Xj', j=1...m in den Datenprozessor zu laden. Der Computer 162 stellt die geladenen weiteren Druckwerte Xj' j=1...m auf der Ausgabeeinheit 164 als weitere Werkzeuginnendruckkurve Y' graphisch dar. Die weitere Werkzeuginnendruckkurve Y' ist in Fig. 7 dargestellt.

Nun befiehlt das Computerprogramm C dem Computer 162 für die zeitliche Folge von weiteren Druckwerten Xj', j=1...m mindestens einen weiteren Kennwert Ki', i=1...n automatisch zu ermitteln.

Ein erster weiterer Kennwert Ki', i=1 ist der maximale Werkzeuginnendruck Pmax der weiteren Werkzeuginnendruckkurve Y'.

Ein zweiter weiterer Kennwert Ki', i=2 ist der Zeitpunkt tmax des maximalen Werkzeuginnendruckes Pmax der weiteren Werkzeuginnendruckkurve Y'.

Ein dritter weiterer Kennwert Ki', i=3 ist der Gradient des in der Nachdruckphase II abfallenden Werkzeuginnendruckes P.

Ein vierter weiterer Kennwert Ki', i=4 ist der Fülldruck PII auf der weiteren Werkzeuginnendruckkurve Y' in der Einspritzphase I.

Ein fünfter weiterer Kennwert Ki', i=5 ist der Gradient des in der Einspritzphase I bis zum Umschaltzeitpunkt tII ansteigenden Werkzeuginnendruckes P.

Ein sechster weiterer Kennwert Ki', i=6 ist der Zeitpunkt tI mit dem die Einspritzphase I beginnt.

Ein siebter weiterer Kennwert Ki', i=7 ist das Integral der weiteren Werkzeuginnendruckkurve Y' zwischen dem Zeitpunkt tI mit dem die Einspritzphase I beginnt und dem Zeitpunkt tmax des maximalen Werkzeuginnendruckes Pmax.

Ein achter weiterer Kennwert Ki', i=8 ist der Gradient beim maximalen Werkzeuginnendruck Pmax.

Ein neuer weiterer Kennwert Ki' i=9 ist der Gradient des in der Restkühlphase III abfallenden Werkzeuginnendruckes P.

Ein zehner weiter Kennwert Ki', i=10 ist der Zeitpunkt tIV des Endes der Restkühlphase III.

Ein elfter weiterer Kennwert Ki', i=11 ist die Zeitdauer (tIV-tI) des weiteren Zyklus Z'.

Ein zwölfter weiterer Kennwert Ki'. i=12 ist ein mittlerer Werkzeuginnendruck Pm des weiteren Zyklus Z'. Der mittlere Werkzeuginnendruck Pm ist das arithmetische Mittel der weiteren Druckwerte Xj', j=1...m des weiteren Zyklus Z'.

Ein dreizehnter weiterer Kennwert Ki', i=13 ist ein Integral des Werkzeuginnendruckes P über die Zeitdauer (tIV-tI) des weiteren Zyklus Z'.

Ein vierzehnter weiterer Kennwert Ki', i=14 ist eine Summe aller drucknormierten Abstände zwischen Druckwerten Xkj, k=2, j=1...m des Zyklus Zk, k=2 und weiteren Druckwerten Xj', j=1...m des weiteren Zyklus Z'.

Ein fünfzehnter weiterer Kennwert Ki', i=15 ist eine Summe aller zeitnormierten Abstände zwischen Druckwerten Xkj, k=2, j=1...m des Zyklus Zk, k=2 und weiteren Druckwerten Xj', j=1...m des weiteren Zyklus Z'.

Somit wird für den weiteren Zyklus Z' die zeitliche Folge von weiteren Druckwerten Xj', j=1...m auf mindestens einen weiteren Kennwert Ki' i=1...n reduziert.

Das Computerprogramm C befiehlt dem Computer 162 die weitere Werkzeuginnendruckkurve Y' im Datenspeicher abzuspeichern.

Das Computerprogramm C befiehlt dem Computer 162 den ermittelten weiteren Kennwert Ki', i=1...n im Datenspeicher abzuspeichern.

Das in den Datenprozessor geladene Computerprogramm C veranlasst den Computer 162 den sechsten Schritt V6 des Verfahrens durchzuführen. Das Computerprogramm C befiehlt dem Computer 162 für den weiteren Zyklus Z' den mindestens einen weiteren Kennwert Ki', i=1...n in mindestens einem weiteren Entscheidungsbaum Bi', i=1...n automatisch zu partitionieren und eine durchschnittliche weitere Tiefe Ti', i=1...n des weiteren Entscheidungsbaumes Bi', i=1...n automatisch zu ermitteln.

Dazu befiehlt das Computerprogramm C dem Computer 162 für den weiteren Zyklen Z' mindestens einen weiteren Kennwert Kj', i=1...n in den Datenprozessor zu laden. Gemäss Fig. 8 gibt der Computer den weiteren Kennwert Ki', i=1...n auf einer ersten Ebene in einen weiteren Wurzelknoten B1', i=1...n des weiteren Entscheidungsbaumes Bi', i=1...n ein. Das Computerprogramm C befiehlt dem Computer 162 mindestens eine zufällige Entscheidungsregel E auf den weiteren Kennwert Ki', i=1...n im weiteren Wurzelknoten B1', i=1...n anzuwenden. Mit der Entscheidungsregel E wird der weitere Kennwert Ki', i=1...n über weitere Pfade Bi2', i=1...n und weitere innere Knoten Bi3', i=1...n in weiteren Blättern Bi4', i=1...n partitioniert.

Weiter befiehlt das Computerprogramm C dem Computer 162 eine weitere Tiefe T', i=1...n des weiteren Entscheidungsbaumes Bi', i=1...n zu ermitteln. Dazu ermittelt der Computer 162 die Anzahl der Ebenen des weiteren Entscheidungsbaumes Bi', i=1...n. Gemäss Fig. 8 hat der weitere Entscheidungsbaum Bi', i=1...n drei Ebenen. Der Computer 162 gibt die Anzahl der Ebenen des weiteren Entscheidungsbaumes Bi', i=1...n als weitere Tiefe Ti', i=1...n des weiteren Entscheidungsbaumes Bi', i=1...n aus.

Das Computerprogramm C befiehlt dem Computer 162 den weiteren Entscheidungsbaum Bi', i=1...n mit dem für den weiteren Zyklus Z' partitionierten weiteren Kennwert Ki', i=1...n und die weitere Tiefe Ti', i=1...n im Datenspeicher abzuspeichern.

Das in den Datenprozessor geladene Computerprogramm C veranlasst den Computer 162 den siebten Schritt V7 des Verfahrens durchzuführen.

Dazu befiehlt das Computerprogramm C dem Computer 162 die durchschnittliche Tiefe Ti, i=1...n des Entscheidungsbaumes Bi, i=1...n für den Kennwert Kki, k=1...l, i=1...n und die weitere Tiefe T' des weiteren Entscheidungsbaumes Bi', i=1...n für den weiteren Kennwert Ki', i=1...n in den Datenprozessor zu laden. Der Kennwert Kki, k=1...l, i=1...n und der weitere Kennwert Ki', i=1...n haben den gleichen Kennwert-Index i. Der Computer 162 ermittelt, ob die weitere Tiefe Ti', i=1...n des weiteren Entscheidungsbaumes Bi', i=1...n geringer als die durchschnittliche Tiefe Ti, i=1...n des Entscheidungsbaumes Bi, i=1...n ist und eine Anomalie des Werkzeuginnendruckes P vorliegt. Bei Vorliegen einer Anomalie des Werkzeuginnendruckes P wird das Stückgut 14 als Schlechtteil S qualifiziert, bei Nicht-Vorliegen einer Anomalie des Werkzeuginnendruckes P wird das Stückgut 14 als Gutteil G qualifiziert.

Der Entscheidungsbaum Bi, i=1...n eignet sich nicht nur zur Erkennung von Anomalien des Werkzeuginnendruckes P, er eignet sich auch bei der Klassierung von Stückgut 14 als Gutteil oder Schlechtteil S. Denn bei einer leichten Anomalien des Werkzeuginnendruckes P kann das hergestellte Stückgut 14 trotzdem ein Gutteil G sein. Das Stückgut 14 wird dann aufgrund einer geringen weiteren Tiefe Ti', i=1...n zwar als Schlechtteil S qualifiziert, bei einer Kontrolle in der Qualitätskontrolleinheit 15 erfüllt das hergestellte Stückgut 14 dann doch das vordefinierte Qualitätsmerkmal und wird als Gutteil G erkannt. Die Qualifizierung als Schlechtteil S aufgrund einer geringen weiteren Tiefe Ti', i=1...n ist also "falsch positiv", tatsächlich ist das Stückgut 14 ein Gutteil G. Umgekehrt kann es sein, dass ein Stückgut 14 aufgrund einer ausreichend grossen weitere Tiefe Ti', i=1...n als Gutteil G qualifiziert, das Stückgut 14 dann bei einer Kontrolle in der Qualitätskontrolleinheit 15 dann das vordefinierte Qualitätsmerkmal doch nicht erfüllt und wird als Schlechtteil S erkannt. Die Qualifizierung als Gutteil G aufgrund einer ausreichend grossen weiteren Tiefe Ti', i=1...n ist also "falsch negativ", tatsächlich ist das Stückgut 14 ein Schlechtteil G.

Um die Empfindlichkeit des Entscheidungsbaumes Bi, i=1...n bei der Klassierung von Stückgut 14 als Gutteil G oder Schlechtteil S zu erhöhen, veranlasst das in den Datenprozessor geladene Computerprogramm C den Computer 162 die durchschnittliche Tiefe Ti, i=1...n des Entscheidungsbaumes Bi, i=1...n zu optimieren.

Bei Erkennung von "falsch positiv" qualifiziertem Stückgut 14, ermittelt der Computer 162 eine optimierte Tiefe T+i, i=1...n des Entscheidungsbaumes Bi, i=1...n, die aus der durchschnittliche Tiefe Ti, i=1...n besteht und um einen "falsch positiv"-Faktor α verkürzt ist:

$$T{+}i \;=\; Ti \;-\; \alpha, \; i{=}1...n$$

Bei Erkennung von "falsch negativ" qualifiziertem Stückgut 14, ermittelt der Computer 162 eine optimierte Tiefe T+i, i=1...n des Entscheidungsbaumes Bi, i=1...n, die aus der durchschnittliche Tiefe Ti, i=1...n besteht und um einen "falsch negativ"-Faktor β verkürzt ist:

$$T{+}i \;=\; Ti \;-\; \beta, \; i{=}1...n$$

Vorzugsweise verkürzt der "falsch positiv"-Faktor α die durchschnittliche Tiefe Ti, i=1...n um 10%. Vorzugsweise verlängert der "falsch negativ"-Faktor β die durchschnittliche Tiefe Ti, i=1...n um 10%. Die optimierte Tiefe T+i, i=1...n des Entscheidungsbaumes Bi, i=1...n ist insbesondere bei der Herstellung von teurem Stückgut 14 vorteilhaft, da dadurch die Herstellkosten so tief wie möglich gehalten werden.

Das Computerprogramm C befiehlt dem Computer 162 die optimierte Tiefe T+i, i=1...n des Entscheidungsbaumes Bi, i=1...n, den "falsch positiv"-Faktor α und den "falsch negativ"-Faktor β im Datenspeicher abzuspeichern.

Die Anomalie des Werkzeuginnendruckes P wird über einen Kennwert Kki, k=1...1, i=1...n erkannt. Über Expertenwissen ist es möglich, dem mindestens einen Kennwert Kki, k=1...1, i=1...n mindestens einer Maschineneinstellgrösse Mh, h=1...r für die Spritzgiessmaschine 1 zuzuordnen, um die Anomalie des Werkzeuginnendruckes P zu beheben. Die Maschineneinstellgrösse Mh, h=1...r ist im Datenspeicher gespeichert.

Eine erste Maschineneinstellgrösse Mh, h=1 ist der Umschaltzeitpunkt tII. Der Umschaltzeitpunkt tII lässt sich über eine definierte Position der Schnecke in ihrer Translationsbewegung einstellen.

Eine zweite Maschineneinstellgrösse Mh, h=2 ist ein Druck in einer Hydraulik der Schnecke in der Nachdruckphase II. Dieser lässt sich einstellen.

Eine dritte Maschineneinstellgrösse Mh, h=3 ist die Dosiergeschwindigkeit der Schnecke, d.h. die Geschwindigkeit mit der sich die Schnecke die Schmelze 12 gegen die Düse bewegt. Diese lässt sich einstellen.

Eine vierte Maschineneinstellgrösse Mh, h=4 ist die Einspritzgeschwindigkeit der Schmelze durch die Düse in die Kavität. Diese lässt sich einstellen.

Eine fünfte Maschineneinstellgrösse Mh, h=5 ist die Entlastungsbewegung der Schnecke in der Einspritzphase I. Diese lässt sich einstellen.

Eine sechste Maschineneinstellgrösse Mh, h=6 ist die Temperatur der Schmelze. Diese lässt sich einstellen.

Eine siebte Maschineneinstellgrösse Mh, h=7 ist die Temperatur des Werkzeuges. Diese lässt sich einstellen.

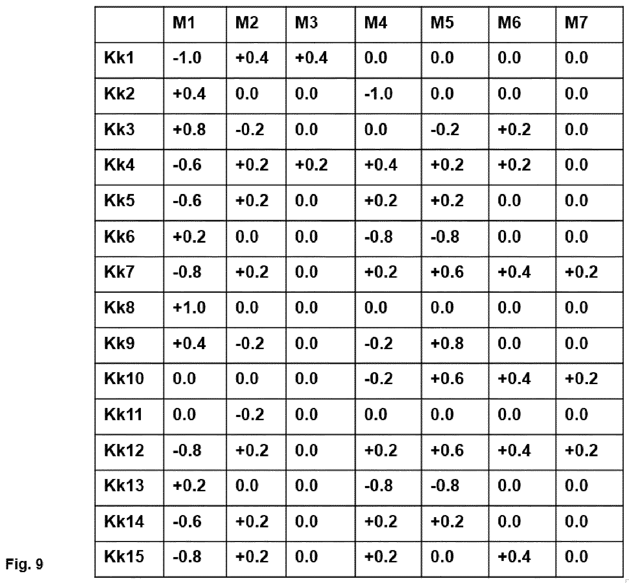

Fig. 9 zeigt eine Korrelationstabelle zwischen im Verfahren gemäss Fig. 1 ermittelten mindestens einen Kennwert Kki, k=1...1, i=1...n und der mindestens einen Maschineneinstellgrösse Mh, h=1...r für die Spritzgiessmaschine 1 gemäss Fig. 2. Die Ausprägung der Korrelation zwischen dem Kennwert und der Maschineneinstellgrösse Mh, h=1...r variiert auf einer Skala von -1.0 (schwach) über 0.0 (neutral) bis +1.0 (stark). Über die Ausprägung der Korrelation ist für einen Kennwert Kki, k=1...1, i=1...n eine Maschineneinstellgrösse Mh, h=1...r identifizierbar.

Das in den Datenprozessor geladene Computerprogramm C veranlasst den Computer 162 bei Erkennung einer Anomalie des Werkzeuginnendruckes P, mindestens eine Maschineneinstellgrösse Mh, h=1...r, welche eine ausgeprägte Korrelation mit dem mindestens einen im zweiten Schritt V2 des Verfahrens ermittelten Kennwert Kki, k=1...1, i=1...n aufweist, über die Korrelationstabelle zu identifizieren und aus dem Datenspeicher zu laden. Die mindestens eine Maschineneinstellgrösse Mh, h=1...r mit der stärksten Korrelation wird auf der Ausgabeeinheit 164 dargestellt. Dazu wird auch eine vorzunehmende Einstellung der Maschineneinstellgrösse Mh, h=1...r auf der Ausgabeeinheit 164 dargestellt. Die Person erhält so eine Mitteilung, dass eine Anomalie des Werkzeuginnendruckes P vorliegt und mit welcher vorzunehmenden Einstellung einer Maschineneinstellgrösse Mh, h=1...r die Anomalie des Werkzeuginnendruckes P zu beheben ist.

## Bezugszeichenliste

| | |
|---|---|
| 1 | Spritzgiessmaschine |
| 10 | Steuereinrichtung |
| 11 | Einspritzvorrichtung |
| 12 | Schmelze |
| 13 | Spritzgiesswerkzeug |
| 14 | Stückgut |
| 15 | Qualitätskontrolleinheit |
| 16 | Auswerteeinheit |
| 161 | Wandlereinheit |
| 162 | Computer |
| 163 | Eingabeeinheit |
| 164 | Ausgabeeinheit |
| α | "falsch positiv"-Faktor |
| β | "falsch negativ"-Faktor |
| Bi | Entscheidungsbaum |
| B1i | Wurzel |
| B2i | Pfad |
| B3i | innerer Knoten |
| B4i | Blatt |
| Bi' | weiterer Entscheidungsbaum |
| C | Computerprogramm |
| E | Entscheidungskriterium |
| G | Gutteil |
| h | Maschineneinstellgrösse-Index |
| i | Kennwert-Index |
| I | Einspritzphase |
| II | Nachdruckphase |
| III | Restkühlphase |

| | |
|---|---|
| j | Signal-Index |
| k | Zyklus-Index |
| Kki | Kennwert |
| l | Zyklus-Zahl |
| Mh | Maschineneinstellgrösse |
| m | Signal-Zahl |
| n | Kennwert-Zahl |
| P | Werkzeuginnendruck |
| PI | initialer Werkzeuginnendruck |
| PII | Fülldruck |
| PIII | Siegelpunktdruck |
| PSkj | Drucksignal |
| PSj' | weiteres Drucksignal |
| Pm | mittlerer Werkzeuginnendruck |
| Pmax | maximaler Werkzeuginnendruck |
| QS | Qualitätssignal |
| r | Maschineneinstellgrösse-Zahl |
| S | Schlechtteil |
| Shi | Einstellgrösse |
| Ti | durchschnittliche Tiefe |
| Ti' | weitere Tiefe |
| T+i | optimierte Tiefe |
| t | Zeit |
| tl | Beginn der Einspritzphase |
| tll | Umschaltzeitpunkt |
| tlll | Siegelpunkt |
| tiv | Ende der Restkühlphase |
| tmax | Zeitpunkt des maximalen Werkzeuginnendruckes |
| Xkj | Druckwert |
| Yk | Werkzeuginnendruckkurve |
| Y' | weitere Werkzeuginnendruckkurve |
| Zk | Zyklus |

**Patentansprüche**

1. Verfahren zur Ermittlung von Anomalien bei einem zyklischen Herstellprozess; bei dem in einem Zyklus $(Zk, k=1...1)$ des Herstellungsprozesses ein Stückgut (14) hergestellt wird; und in welchem Zyklus $(Zk, k=1...1)$ ein Werkzeuginnendruck (P) gemessen wird, wobei bei einer Anomalie des Werkzeuginnendruckes (P) das Stückgut (14) ein Schlechtteil (S) ist;

   wobei in einem ersten Schritt (V1) des Verfahrens für mindestens einen Zyklus $(Zk, k=1...l)$ mindestens eine zeitliche Folge von Druckwerten $(Xkj, k=1...l, j=1...m)$ bereitgestellt wird;
   wobei in einem zweiten Schritt (V2) des Verfahrens für jede zeitliche Folge von Druckwerten $(Xkj, k=1...1, j=1...m)$ mindestens ein Kennwert $(Kki, k=1...1, i=1...n)$ automatisch ermittelt wird;
   wobei in einem dritten Schritt (V3) des Verfahrens für mehrere Zyklen $(Zk, k=1...1)$ der Kennwert $(Kki, k=1...l, i=1...n)$ in mindestens einem Entscheidungsbaum $(Bi, i=1...n)$ automatisch partitioniert wird und eine durchschnittliche Tiefe $(Ti, i=1...n)$ des Entscheidungsbaumes $(Bi, i=1...n)$ automatisch ermittelt wird;
   wobei in einem vierten Schritt (V4) des Verfahrens in einen weiteren Zyklus (Z') eine zeitliche Folge von weiteren Druckwerten $(Xj', j=1...m)$ bereitgestellt wird;
   wobei in einem fünften Schritt (V5) des Verfahrens für die zeitliche Folge von weiteren Druckwerten $(Xj', j=1...m)$ mindestens ein weiterer Kennwert $(Ki', i=1... n)$ automatisch ermittelt wird;
   wobei in einem sechsten Schritt (V6) des Verfahrens der weitere Kennwert $(Ki', i=1...n)$ in mindestens einem weiteren Entscheidungsbaum $(Bi', i=1...n)$ automatisch partitioniert wird und eine weitere Tiefe $(Ti', i=1...n)$ des weiteren Entscheidungsbaumes $(Bi', i=1...n)$ automatisch ermittelt wird; und
   wobei in einem siebten Schritt (V7) des Verfahrens automatisch ermittelt wird, ob für einen Kennwert $(Kki, k=1...l, i=1...n)$ und einen weiteren Kennwert $(Ki', i=l... n)$ mit gleichem Kennwert-Index (i) die weitere Tiefe $(Ti', i=1...n)$ des weiteren Entscheidungsbaumes $(Bi', i=1...n)$ geringer als die durchschnittliche Tiefe $(Ti, i=1...n)$ des Entscheidungsbaumes $(Bi, i=1...n)$ ist und eine Anomalie des Werkzeuginnendruckes (P) vorliegt.

2. Verfahren nach Anspruch 1, **dadurch gekennzeichnet, dass** im zweiten Schritt (V2) des Verfahrens für jede zeitliche Folge von Druckwerten $(Xkj, k=1...l, j=1...m)$ mehrere Kennwerte $(Kki, k=1...1, i=1...n)$ automatisch ermittelt werden; und dass im dritten Schritt (V3) des Verfahrens für mehrere Zyklen $(Zk, k=1...1)$ mehrere Kennwerte $(Kki, k=1...1, i=1...n)$ in mindestens einem Entscheidungsbaum $(Bi, i=1...n)$ automatisch partitioniert werden und eine durchschnittliche Tiefe $(Ti, i=1...n)$ des Entscheidungsbaumes $(Bi, i=1...n)$ automatisch ermittelt wird.

3. Verfahren nach Anspruch 2, **dadurch gekennzeichnet, dass** im fünften Schritt (V5) des Verfahrens für die zeitliche Folge von weiteren Druckwerten $(Xj', j=1...m)$ mehrere weitere Kennwert $(Ki', i=1...n)$ automatisch ermittelt werden; und dass im sechsten Schritt (V6) des Verfahrens die mehreren weiteren Kennwerte $(Ki', i=1...n)$ in mindestens einem weiteren Entscheidungsbaum $(Bi', i=1...n)$ automatisch partitioniert werden und eine weitere Tiefe $(Ti', i=1...n)$ des weiteren Entscheidungsbaumes $(Bi', i=1...n)$ automatisch ermittelt wird.

4. Verfahren nach Anspruch 3, **dadurch gekennzeichnet, dass** im siebten Schritt (V7) des Verfahrens automatisch ermittelt wird, ob für die mehreren Kennwerte $(Kki, k=1...l, i=1...n)$ und die mehreren weiteren Kennwerte (Ki', i=1...n) mit gleichem Kennwert-Index (i) die weitere Tiefe (Ti', i=1...n) des weiteren Entscheidungsbaumes (Bi', i=1...n) geringer als die durchschnittliche Tiefe (Ti, i=1...n) des Entscheidungsbaumes (Bi, i=1...n) ist und eine Anomalie des Werkzeuginnendruckes (P) vorliegt.

5. Verfahren nach einem der Ansprüche 1 bis 4, **dadurch gekennzeichnet, dass** im zweiten Schritt (V2) des Verfahrens mindestens einer der folgenden Kennwerte (Kki, k=1...l, i=1...n) automatisch ermittelt wird:

ein maximaler Werkzeuginnendruck (Pmax) einer Werkzeuginnendruckkurve (Yk, k=1...1);
ein Zeitpunkt (tmax) des maximalen Werkzeuginnendruckes (Pmax) einer Werkzeuginnendruckkurve (Yk, k=1...l);
ein Gradient des in einer Nachdruckphase (II) abfallenden Werkzeuginnendruckes (P);
ein Fülldruck (PII) auf einer Werkzeuginnendruckkurve (Yk, k=1...1) in einer Einspritzphase (I);
ein Gradient des in einer Einspritzphase (I) bis zu einem Umschaltzeitpunkt (tII) ansteigenden Werkzeuginnendruckes (P);
ein Zeitpunkt (tI) mit dem eine Einspritzphase (I) beginnt;
ein Integral einer Werkzeuginnendruckkurve (Yk, k=1...1) zwischen einem Zeitpunkt (tI) mit dem eine Einspritzphase (I) beginnt und einem Zeitpunkt (tmax) eines maximalen Werkzeuginnendruckes (Pmax);
ein Gradient bei einem maximalen Werkzeuginnendruck (Pmax);
ein Gradient des in einer Restkühlphase (III) abfallenden Werkzeuginnendruckes (P);
ein Zeitpunkt (tIV) des Endes einer Restkühlphase (III);
eine Zeitdauer (tIV-tI) des Zyklus (Zk, k=1...l);
ein mittlerer Werkzeuginnendruck (Pm) des Zyklus (Zk, k=1...l);
ein Integral des Werkzeuginnendruckes (P) über eine Zeitdauer (tIV-tI) des Zyklus (Zk, k=1...1);
ein Summe von drucknormierten Abstände zwischen Druckwerten (Xkj, k=1...1, j=1...m) eines Zyklus (Zk, k=1...1) mit einem Gutteil (S) und Druckwerten (Xkj, k=1...1, j=1...m) eines Zyklus (Zk, k=1...1) mit einem Schlechtteil (S); und
eine Summe von zeitnormierten Abstände zwischen Druckwerten (Xkj, k=1...1, j=1...m) eines Zyklus (Zk, k=1...1) mit einem Gutteil (S) und Druckwerten (Xkj, k=1...1, j=1...m) eines Zyklus (Zk, k=1...1) mit einem Schlechtteil (S).

6. Verfahren nach Anspruch 5, **dadurch gekennzeichnet, dass** im fünften Schritt (V5) des Verfahrens mindestens einer der folgenden weiteren Kennwerte (Ki', i=1...n) automatisch ermittelt wird:

ein maximaler Werkzeuginnendruck (Pmax) einer weiteren Werkzeuginnendruckkurve (Yk');
ein Zeitpunkt (tmax) des maximalen Werkzeuginnendruckes (Pmax) einer weiteren Werkzeuginnendruckkurve (Y');
ein Gradient des in einer Nachdruckphase (II) abfallenden Werkzeuginnendruckes (P);
ein Fülldruck (PII) auf einer weiteren Werkzeuginnendruckkurve (Y') in einer Einspritzphase (I);
ein Gradient des in einer Einspritzphase (I) bis zu einem Umschaltzeitpunkt (tII) ansteigenden Werkzeuginnendruckes (P);
ein Zeitpunkt (tI) mit dem eine Einspritzphase (I) beginnt;
ein Integral einer weiteren Werkzeuginnendruckkurve (Y') zwischen einem Zeitpunkt (tI) mit dem eine Einspritzphase (I) beginnt und einem Zeitpunkt (tmax) eines maximalen Werkzeuginnendruckes (Pmax);
ein Gradient bei einem maximalen Werkzeuginnendruck (Pmax);
ein Gradient des in einer Restkühlphase (III) abfallenden Werkzeuginnendruckes (P);
ein Zeitpunkt (tIV) des Endes einer Restkühlphase (III);
eine Zeitdauer (tIV-tI) des weiteren Zyklus (Z');
ein mittlerer Werkzeuginnendruck (Pm) des weiteren Zyklus (Z');
ein Integral des Werkzeuginnendruckes (P) über eine Zeitdauer (tIV-tI) des weiteren Zyklus (Z');
ein Summe von drucknormierten Abstände zwischen Druckwerten (Xkj, k=1...1, j=1...m) des Zyklus (Zk, k=1...1) und weiteren Druckwerten (Xj', j=1...m) des weiteren Zyklus (Z'); und
eine Summe von zeitnormierten Abstände zwischen Druckwerten (Xkj, k=1...1, j=1...m) des Zyklus (Zk, k=1...1) und weiteren Druckwerten (Xj', j=1...m) des weiteren Zyklus (Z').

7. Verfahren nach Anspruch 1, **dadurch gekennzeichnet, dass** das Stückgut (14) bei Vorliegen einer Anomalie des Werkzeuginnendruckes (P) als Schlechtteil (S) qualifiziert wird; und dass das Stückgut (14) bei Nicht-Vorliegen einer Anomalie des Werkzeuginnendruckes (P) als Gutteil (G) qualifiziert wird.

8. Verfahren nach Anspruch 7, **dadurch gekennzeichnet, dass** bei Erkennung von "falsch positiv" qualifiziertem Stückgut (14) die durchschnittliche Tiefe (Ti, i=1...n) um einen "falsch positiv"-Faktor ($\alpha$) verkürzt wird; und/oder dass bei Erkennung von "falsch negativ" qualifiziertem Stückgut (14) die durchschnittliche Tiefe (Ti, i=1...n) um einen "falsch negativ"-Faktor (β) verkürzt wird.

9. Verfahren nach einem der Ansprüche 1 bis 8, **dadurch gekennzeichnet, dass** bei Erkennung einer Anomalie des Werkzeuginnendruckes (P) mindestens eine Maschineneinstellgrösse (Mh, h=1...r), welche mit dem mindestens einen im zweiten Schritt (V2) des Verfahrens ermittelten Kennwert (Kki, k=1...1, i=1...n) ausgeprägt korreliert, identifiziert wird; und dass eine vorzunehmende Einstellung der Maschineneinstellgrösse (Mh, h=1...r) ausgegeben wird, um die Anomalie des Werkzeuginnendruckes (P) zu beheben.

10. Spritzgiessmaschine (1) zur Durchführung des Verfahrens nach einem der Ansprüche 1 bis 9,

bei dem Anomalien bei einem zyklischen Herstellprozess ermittelt werden; bei dem in einem Zyklus (Zk, k=1...1) des Herstellungsprozesses ein Stückgut (14) hergestellt wird; und in welchem Zyklus (Zk, k=1...1) ein Werkzeuginnendruck (P) gemessen wird, wobei bei einer Anomalie des Werkzeuginnendruckes (P) das Stückgut (14) ein Schlechtteil (S) ist;
bei dem in einem ersten Schritt (V1) des Verfahrens für mindestens einen Zyklus (Zk, k=1...1) mindestens eine zeitliche Folge von Druckwerten (Xkj, k=1...l, j=1...m) bereitgestellt wird;
bei dem in einem zweiten Schritt (V2) des Verfahrens für jede zeitliche Folge von Druckwerten (Xkj, k=1...l, j=1...m) mindestens ein Kennwert (Kki, k=1...1, i=1...n) automatisch ermittelt wird;
bei dem in einem dritten Schritt (V3) des Verfahrens für mehrere Zyklen (Zk, k=1...1) der Kennwert (Kki, k=1...l, i=1...n) in mindestens einem Entscheidungsbaum (Bi, i=1...n) automatisch partitioniert wird und eine durchschnittliche Tiefe (Ti, i=1...n) des Entscheidungsbaumes (Bi, i=1...n) automatisch ermittelt wird;
bei dem in einem vierten Schritt (V4) des Verfahrens in einen weiteren Zyklus (Z') eine zeitliche Folge von weiteren Druckwerten (Xj', j=1...m) bereitgestellt wird;
bei dem in einem fünften Schritt (V5) des Verfahrens für die zeitliche Folge von weiteren Druckwerten (Xj', j=1...m) mindestens ein weiterer Kennwert (Ki', i=1...n) automatisch ermittelt wird;
bei dem in einem sechsten Schritt (V6) des Verfahrens der weitere Kennwert (Ki', i=1...n) in mindestens einem weiteren Entscheidungsbaum (Bi', i=1...n) automatisch partitioniert wird und eine weitere Tiefe (Ti', i=1...n) des weiteren Entscheidungsbaumes (Bi', i=1...n) automatisch ermittelt wird; und

bei dem in einem siebten Schritt (V7) des Verfahrens automatisch ermittelt wird, ob für einen Kennwert (Kki, k=1...l, i=1...n) und einen weiteren Kennwert (Ki', i=1...n) mit gleichem Kennwert-Index (i) die weitere Tiefe (Ti', i=1...n) des weiteren Entscheidungsbaumes (Bi', i=1...n) geringer als die durchschnittliche Tiefe (Ti, i=1...n) des Entscheidungsbaumes (Bi, i=1...n) ist und eine Anomalie des Werkzeuginnendruckes (P) vorliegt;
**dadurch gekennzeichnet, dass** die Spritzgiessmaschine (1) einen Drucksensor aufweist, welcher Drucksensor zur Durchführung des ersten Schrittes (V1) des Verfahrens eine zeitliche Folge von Drucksignalen (PSkj, k=1...1, j=1...m) erzeugt; dass die Spritzgiessmaschine (1) eine Wandlereinheit (161) aufweist, welche Wandlereinheit (161) die zeitliche Folge von Drucksignalen (PSkj, k=1...1, j=1...m) automatisch in eine zeitliche Folge von Druckwerten (Xkj, k=1...1, j=1...m) wandelt.

11. Spritzgiessmaschine (1) nach Anspruch 10, **dadurch gekennzeichnet, dass** die Spritzgiessmaschine (1) mindestens einen Computer (162) aufweist; dass der Computer (162) mindestens einen Datenprozessor und mindestens einen Datenspeicher aufweist; dass mindestens ein Computerprogramm (C) im Datenspeicher gespeichert und in den Datenprozessor ladbar ist; dass das in den Datenprozessor geladene Computerprogramm (C) den Computer (162) veranlasst, den zweiten Schritt (V2) des Verfahrens, den dritten Schritt V3) des Verfahrens, den fünften Schritt (V5) des Verfahrens, den sechsten Schritt (V6) des Verfahrens und den siebten Schritt (V7) des Verfahrens durchzuführen.

**Claims**

1. A method for detecting anomalies in a cyclic manufacturing process; wherein an item (14) is produced in one cycle (Zk, k=1...1) of the manufacturing process; and in which cycle (Zk, k=1...1) a cavity pressure (P) is measured; wherein, if there is an anomaly in cavity pressure (P), the item (14) is a bad part (S);

wherein in a first step (V1) of the method at least one chronological sequence of pressure values (Xkj, k=1...1, j=1...m) for at least one cycle (Zk, k=1...1) is provided;
wherein in a second step (V2) of the method for each chronological sequence of pressure values (Xkj, k=1...1, j=1...m) at least one characteristic value (Kki, k=1...1, i=1...n) is automatically determined;
wherein in a third step (V3) of the method the characteristic value (Kki, k=1...1, i=1...n) for a plurality of cycles (Zk, k=1...1) is automatically partitioned in at least one decision tree (Bi, i=1...n) and an average depth (Ti, i=1...n) of the decision tree (Bi, i=1...n) is automatically determined;

**wherein** in a fourth step (V4) of the method a chronological sequence of further pressure values (Xj', j=1...m) in a further cycle (Z') is provided;

**wherein** in a fifth step (V5) of the method at least one further characteristic value (Ki', i=1...n) is automatically determined for the chronological sequence of further pressure values (Xj', j=1...m);

**wherein** in a sixth step (V6) of the method the further characteristic value (Ki', i=1...n) is automatically partitioned in at least one further decision tree (Bi', i=1...n) and a further depth (Ti', i=1...n) of the further decision tree (Bi', i=1...n) is automatically determined; and

**wherein** in a seventh step (V7) of the method it is automatically determined whether for a characteristic value (Kki, k=1...1, i=1...n) and a further characteristic value (Ki', i=1...n) having the same characteristic value index (i) the further depth (Ti', i=1...n) of the further decision tree (Bi', i=1...n) is lower than the average depth (Ti, i=1...n) of the decision tree (Bi, i=1...n) and whether an anomaly in cavity pressure (P) exists.

2. The method according to claim 1, **characterized in that** in the second step (V2) of the method for each chronological sequence of pressure values (Xkj, k=1...1, j=1...m) a plurality of characteristic values (Kki, k=1...1, i=1...n) is automatically determined; and that in the third step (V3) of the method for a plurality of cycles (Zk, k=1...1) a plurality of characteristic values (Kki, k=1...1, i=1...n) are automatically partitioned in at least one decision tree (Bi, i=1...n) and an average depth (Ti, i=1...n) of the decision tree (Bi, i=1...n) is automatically determined.

3. The method according to claim 2, **characterized in that** in the fifth step (V5) of the method a plurality of further characteristic values (Ki', i=1...n) are automatically determined for the chronological sequence of further pressure values (Xj', j=1...m); and **in that** in the sixth step (V6) of the method the plurality of further characteristic values (Ki', i=1...n) are automatically partitioned in at least one further decision tree (Bi', i=1...n) and a further depth (Ti', i=1...n) of the further decision tree (Bi', i=1...n) is automatically determined.

4. The method according to claim 3, **characterized in that** in the seventh step (V7) of the method it is automatically determined whether for the plurality of characteristic values (Kki, k=1...1, i=1...n) and the plurality of further characteristic values (Ki', i=1...n) having the same characteristic value index (i) the further depth (Ti', i=1...n) of the further decision tree (Bi', i=1...n) is lower than the average depth (Ti, i=1...n) of the decision tree (Bi, i=1...n) and whether there is an anomaly in cavity pressure (P).

5. The method according to any of the claims 1 to 4, **characterized in that** in the second step (V2) of the method at least one of the following characteristic values (Kki, k=1...1, i=1...n) is automatically determined:

a maximum cavity pressure (Pmax) of a cavity pressure curve (Yk, k=1...1);
a time point (tmax) of the maximum cavity pressure (Pmax) of a cavity pressure curve (Yk, k=1...1);
a gradient of the cavity pressure (P) decreasing in a holding pressure phase (II);
a filling pressure (PII) on a cavity pressure curve (Yk, k=1...1) in an injection phase (I);
a gradient of the cavity pressure (P) increasing in an injection phase (I) up to a switchover time point (tII);
a time point (tI) at which an injection phase (I) starts;
an integral of a cavity pressure curve (Yk, k=1...1) between a time point (tI) at which an injection phase (I) starts and a time point (tmax) of a maximum cavity pressure (Pmax);
a gradient at a maximum cavity pressure (Pmax);
a gradient of the cavity pressure (P) decreasing in a residual cooling phase (III);
a time point (tIV) of the end of a residual cooling phase (III);
a time period (tIV-tI) of the cycle (Zk, k=1...1);
a mean cavity pressure (Pm) of the cycle (Zk, k=1...1);
an integral of the cavity pressure (P) over a time period (tIV-tI) of the cycle (Zk, k=1...1);
a sum of pressure-normalized intervals between pressure values (Xkj, k=1...1, j=1...m) of a cycle (Zk, k=1...1) that produces a good part (S) and pressure values (Xkj, k=1...1, j=1...m) of a cycle (Zk, k=1...1) that produces a bad part (S); and
a sum of time-normalized intervals between pressure values (Xkj, k=1...1, j=1...m) of a cycle (Zk, k=1...1) that produces a good part (S) and pressure values (Xkj, k=1...1, j=1...m) of a cycle (Zk, k=1...1) that produces a bad part (S).

6. The method according to claim 5, **characterized in that** in the fifth step (V5) of the method at least one of the following further characteristic values (Ki', i=1...n) is automatically determined:

a maximum cavity pressure (Pmax) of a further cavity pressure curve (Yk');

a time point (tmax) of the maximum cavity pressure (Pmax) of a further cavity pressure curve (Y');

a gradient of the cavity pressure (P) decreasing in a holding pressure phase (II);

a filling pressure (PII) on a further cavity pressure curve (Y') in an injection phase (I);

a gradient of the cavity pressure (P) increasing in an injection phase (I) up to a switchover time point (tII);

a time point (tI) at which an injection phase (I) starts;

an integral of a further cavity pressure curve (Y') between a time point (tI) at which an injection phase (I) starts and a time point (tmax) of a maximum cavity pressure (Pmax);

a gradient at a maximum cavity pressure (Pmax);

a gradient of the cavity pressure (P) decreasing in a residual cooling phase (III);

a time point (tIV) of the end of a residual cooling phase (III);

a time period (tIV-tI) of the further cycle (Z');

a mean cavity pressure (Pm) of the further cycle (Z');

an integral of the cavity pressure (P) over a period of time (tIV-tI) of the further cycle (Z');

a sum of pressure-normalized intervals between pressure values (Xkj, k=1...1, j=1...m) of the cycle (Zk, k=1...1) and further pressure values (Xj', j=1...m) of the further cycle (Z'); and

a sum of time-normalized intervals between pressure values (Xkj, k=1...1, j=1...m) of the cycle (Zk, k=1...1) and further pressure values (Xj', j=1...m) of the further cycle (Z').

7. The method according to claim 1, **characterized in that** the item (14) is classified as a bad part (S) if an anomaly in the cavity pressure (P) exists; and **in that** the item (14) is classified as a good part (G) if no anomaly in cavity pressure (P) exists.

8. The method according to claim 7, **characterized in that** when items (14) classified as "false positive" are detected, the average depth (Ti, i=1...n) is reduced by a "false positive" factor ($\alpha$); and/or **in that** when items (14) classified as "false negative" are detected, the average depth (Ti, i=1...n) is reduced by a "false negative" factor ($\beta$).

9. The method according to any of the claims 1 to 8, **characterized in that** when an anomaly in the cavity pressure (P) is detected at least one machine setting variable (Mh, h=1...r) is identified that is strongly correlated with the at least one characteristic value (Kki, k=1...1, i=1...n) determined in the second step (V2) of the method; and **in that** an adjustment to be made of the machine setting variable (Mh, h=1...r) is output in order to eliminate the anomaly in the cavity pressure (P).

10. An injection molding machine (1) for carrying out the method according to any of the claims 1 to 9,

in which anomalies in a cyclic manufacturing process are detected; wherein an item (14) is produced in one cycle (Zk, k=1...1) of the manufacturing process; and in which cycle (Zk, k=1...1) a cavity pressure (P) is measured;

wherein, if there is an anomaly in cavity pressure (P), the item (14) is a bad part (S);

wherein in a first step (V1) of the method at least one chronological sequence of pressure values (Xkj, k=1...1, j=1... m) for at least one cycle (Zk, k=1...1) is provided;

wherein in a second step (V2) of the method for each chronological sequence of pressure values (Xkj, k=1...1, j=1...m) at least one characteristic value (Kki, k=1...1, i=1...n) is automatically determined;

wherein in a third step (V3) of the method the characteristic value (Kki, k=1...1, i=1...n) for a plurality of cycles (Zk, k=1...1) is automatically partitioned in at least one decision tree (Bi, i=1...n) and an average depth (Ti, i=1...n) of the decision tree (Bi, i=1...n) is automatically determined;

wherein in a fourth step (V4) of the method a chronological sequence of further pressure values (Xj', j=1...m) in a further cycle (Z') is provided;

wherein in a fifth step (V5) of the method at least one further characteristic value (Ki', i=1...n) is automatically determined for the chronological sequence of further pressure values (Xj', j=1...m);

wherein in a sixth step (V6) of the method the further characteristic value (Ki', i=1...n) is automatically partitioned in at least one further decision tree (Bi', i=1...n) and a further depth (Ti', i=1...n) of the further decision tree (Bi', i=1...n) is automatically determined; and

wherein in a seventh step (V7) of the method it is automatically determined whether for a characteristic value (Kki, k=1...1, i=1...n) and a further characteristic value (Ki', i=1...n) having the same characteristic value index (i) the further depth (Ti', i=1...n) of the further decision tree (Bi', i=1...n) is lower than the average depth (Ti, i=1...n) of the decision tree (Bi, i=1...n) and whether an anomaly in cavity pressure (P) exists;

**characterized in that** the injection molding machine (1) comprises a pressure sensor, which pressure sensor generates a chronological sequence of pressure signals (PSkj, k=1...1, j=1...m) for carrying out the first step (V1) of the method; **in that** the injection molding machine (1) comprises a converter unit (161), which converter unit (161) automatically converts the chronological sequence of pressure signals (PSkj, k=1...1, j=1...m) into a chronological sequence of pressure values (Xkj, k=1...1, j=1...m).

11. The injection molding machine (1) according to claim 10, **characterized in that** the injection molding machine (1) comprises at least one computer (162); **in that** said computer (162) comprises at least a data processor and at least a data memory; **in that** at least one computer program (C) is stored in the data memory and can be loaded into the data processor; **in that** the computer program (C) loaded into the data processor causes the computer (162) to carry out the second step (V2) of the method, the third step V3) of the method, the fifth step (V5) of the method, the sixth step (V6) of the method, and the seventh step (V7) of the method.

**Revendications**

1. Procédé pour détecter d'anomalies dans un processus de production cyclique, dans lequel une pièce (14) est produite dans un cycle (Zk, k=1...1) du processus de production ; et dans lequel cycle (Zk, k=1...1) une pression interne (P) d'un moule est mesurée, dans lequel, s'il y a une anomalie de la pression interne (P) du moule, la pièce (14) est une pièce défectueuse (S) ;

dans lequel, dans une première étape (V1) du procédé, au moins une séquence temporelle de valeurs de pression (Xkj, k=1...1, j=1...m) pour au moins un cycle (Zk, k=1...1) est fournie ;
dans lequel, dans une deuxième étape (V2) du procédé, au moins une valeur caractéristique (Kki, k=1...1, i=1...n) est automatiquement déterminée pour chaque séquence temporelle de valeurs de pression (Xkj, k=1...1, j=1...m) ;
dans lequel, dans une troisième étape (V3) du procédé, la valeur caractéristique (Kki, k=1...1, i=1...n) pour une pluralité de cycles (Zk, k=1...1) est automatiquement partitionnée dans au moins un arbre de décision (Bi, i=1...n) et une profondeur moyenne (Ti, i=1...n) de l'arbre de décision (Bi, i=1...n) est automatiquement déterminée ;
dans lequel, dans une quatrième étape (V4) du procédé, une séquence temporelle d'autres valeurs de pression (Xj', j=1...m) dans un autre cycle (Z') est fournie ;

dans lequel, dans une cinquième étape (V5) du procédé, au moins une autre valeur caractéristique (Ki', i=1...n) pour la séquence temporelle d'autres valeurs de pression (Xj', j=1...m) est automatiquement déterminée ;
dans lequel, dans une sixième étape (V6) du procédé, l'autre valeur caractéristique (Ki', i=1...n) est automatiquement partitionnée dans au moins un autre arbre de décision (Bi', i=1...n) et une autre profondeur (Ti', i=1...n) de l'autre arbre de décision (Bi', i=1...n) est automatiquement déterminée ; et
dans lequel, dans une septième étape (V7) du procédé, il est automatiquement déterminé, pour une valeur caractéristique (Kki, k=1...1, i=1...n) et une autre valeur caractéristique (Ki', i=1...n) ayant le même indice de valeur caractéristique (i), si l'autre profondeur (Ti', i=1...n) de l'autre arbre de décision (Bi', i=1...n) est inférieure à la profondeur moyenne (Ti, i=1...n) de l'arbre de décision (Bi, i=1...n) et s'il y a une anomalie de la pression interne (P) du moule.

2. Procédé selon la revendication 1, **caractérisé en ce que,** dans la deuxième étape (V2) du procédé, une pluralité de valeurs caractéristiques (Kki, k =1...1, i=1...n) est automatiquement déterminée pour chaque séquence chronologique de valeurs de pression (Xkj, k=1...1, j=1...m) ; et **en ce que**, dans la troisième étape (V3) du procédé, une pluralité de valeurs caractéristiques (Kki, k=1...1, i=1...n) pour une pluralité de cycles (Zk, k=1...1) est automatiquement partitionnée dans au moins un arbre de décision (Bi, i=1...n) et une profondeur moyenne (Ti, i=1...n) de l'arbre de décision (Bi, i=1...n) est automatiquement déterminée.

3. Procédé selon la revendication 2, **caractérisé en ce que,** dans la cinquième étape (V5) du procédé, une pluralité d'autres valeurs caractéristiques (Ki', i=1...n) est automatiquement déterminée pour la séquence chronologique d'autres valeurs de pression (Xj', j=1.... m) ; et **en ce que**, dans la sixième étape (V6) du procédé, la pluralité d'autres valeurs caractéristiques (Ki', i=1...n) est automatiquement partitionnée dans au moins un autre arbre de décision (Bi', i=1...n) et qu'une autre profondeur (Ti', i=1...n) de l'autre arbre de décision (Bi', i=1...n) est automatiquement déterminée.

4. Procédé selon la revendication 3, **caractérisé en ce que,** dans la septième étape (V7) du procédé, il est automatiquement déterminé pour la pluralité de valeurs caractéristiques (Kki, k=1...1, i=1...n) et la pluralité d'autres valeurs caractéristiques (Ki', i=1.... n) ayant le même indice de valeur caractéristique (i) si l'autre profondeur (Ti', i=1...n) de l'autre arbre de décision (Bi', i=1...n) est inférieure à la profondeur moyenne (Ti, i=1...n) de l'arbre de décision (Bi, i=1...n) et s'il y a une anomalie de la pression interne (P) du moule.

5. Procédé selon l'une quelconque des revendications 1 à 4, **caractérisé en ce que,** dans la deuxième étape (V2) du procédé, au moins une des valeurs caractéristiques (Kki, k=1...1, i=1...n) suivantes est automatiquement déterminée :

   une pression interne maximale du moule (Pmax) d'une courbe de pression interne du moule (Yk, k=1...1) ;
   un moment (tmax) de la pression interne maximale du moule (Pmax) d'une courbe de pression interne du moule (Yk, k=1...1) ;
   un gradient de la pression interne du moule (P) décroissant dans une phase de pression de maintien (II) ;
   une pression de remplissage (PII) sur une courbe de pression interne du moule (Yk, k=1...1) dans une phase d'injection (I) ;
   un gradient de la pression interne du moule (P) augmentant dans une phase d'injection (I) jusqu'à un point de commutation (tII) ;
   un moment (tI) où commence une phase d'injection (I) ;
   une intégrale de la courbe de pression interne du moule (Yk, k=1...1) entre un moment (tI) où commence une phase d'injection (I) et un moment (tmax) d'une pression interne maximale (Pmax) du moule ;
   un gradient à une pression interne maximale (Pmax) du moule ;
   un gradient de la pression interne du moule (P) décroissant dans une phase de refroidissement résiduel (III) ;
   un moment (tIV) de la fin d'une phase de refroidissement résiduel (III) ;
   une durée (tIV-tI) du cycle (Zk, k=1...1) ;
   une pression interne moyenne du moule (Pm) du cycle (Zk, k=1...1) ;
   une intégrale de la pression interne du moule (P) pendant une durée (tIV-tI) du cycle (Zk, k=1...1) ;
   une somme d'intervalles normalisés en pression entre les valeurs de pression (Xkj, k=1...1, j=1...m) d'un cycle (Zk, k=1...1) produisant une pièce bonne (S) et les valeurs de pression (Xkj , k=1...1, j=1...m) d'un cycle (Zk, k=1...1) produisant une pièce défectueuse (S); et
   une somme d'intervalles normalisés dans le temps entre les valeurs de pression (Xkj, k=1...1, j=1...m) d'un cycle (Zk, k=1...1) produisant une pièce bonne (S) et les valeurs de pression ( Xkj, k=1...1, j=1...m) d'un cycle (Zk, k=1...1) produisant une pièce défectueuse (S).

6. Procédé selon la revendication 5, **caractérisé en ce que,** dans la cinquième étape (V5) du procédé, au moins une des autres valeurs caractéristiques (Ki', i=1...n) suivantes est automatiquement déterminée :

   une pression interne maximale du moule (Pmax) d'une autre courbe de pression interne du moule (Yk') ;
   un moment (tmax) de la pression interne maximale (Pmax) du moule d'une autre courbe de pression interne du moule (Y') ;
   un gradient de la pression interne du moule (P) décroissant dans une phase de pression de maintien (II) ;
   une pression de remplissage (PII) sur une autre courbe de pression interne du moule (Y') dans une phase d'injection (I) ;
   un gradient de la pression interne du moule (P) augmentant dans une phase d'injection (I) jusqu'à un point de commutation (tII) ;
   un moment (tI) où commence une phase d'injection (I) ;
   une intégrale d'une autre courbe de pression interne du moule (Y') entre un point (tI) où commence une phase d'injection (I) et un point (tmax) d'une pression interne maximale du moule (Pmax) ;
   un gradient à une pression interne maximale du moule (Pmax) ;
   un gradient de la pression interne du moule (P) décroissant dans une phase de refroidissement résiduel (III) ;
   un moment (tIV) de la fin d'une phase de refroidissement résiduel (III) ;
   une durée (tIV-tI) de l'autre cycle (Z') ;
   une pression interne moyenne du moule (Pm) de l'autre cycle (Z') ;
   une intégrale de la pression interne (P) du moule pendant une durée (tIV-tI) de l'autre cycle (Z') ;
   une somme d'intervalles normalisés en pression entre les valeurs de pression (Xkj, k=1...1, j=1...m) du cycle (Zk, k=1...1) et d'autres valeurs de pression (Xj', j=1...m) de l'autre cycle (Z') ; et
   une somme d'intervalles normalisés dans le temps entre les valeurs de pression (Xkj, k=1...1, j=1...m) du cycle (Zk, k=1...1) et d'autres valeurs de pression (Xj', j=1...m) de l'autre cycle (Z').

7. Procédé selon la revendication 1, **caractérisé en ce que** la pièce (14) est classée comme pièce défectueuse (S) s'il y a une anomalie de la pression interne (P) du moule ; et **en ce que** la pièce (14) est classée comme pièce bonne (G) s'il n'y a pas d'anomalie de la pression interne (P) du moule.

8. Procédé selon la revendication 7, **caractérisé en ce**

**que** lorsque des pièces (14) classées comme « faux positifs » sont détectées, la profondeur moyenne (Ti, i = 1...n) est réduite par un facteur « faux positif » (α) ; et/ou **en ce que** lorsque des pièces (14) classées comme « faux négatifs » sont détectées, la profondeur moyenne (Ti, i = 1...n) est réduite par un facteur « faux négatif » (β).

9. Procédé selon l'une quelconque des revendications 1 à 8, **caractérisé en ce que** lorsqu'une anomalie de la pression interne du moule (P) est détectée, au moins un paramètre de réglage de la machine (Mh, h=1...r) est identifiée qui est fortement corrélée avec au moins une valeur caractéristique (Kki, k=1...1, i=1...n) déterminée lors de la deuxième étape (V2) du procédé ; et **en ce qu'**un ajustement à réaliser au paramètre de réglage de la machine (Mh, h=1...r) est émis afin d'éliminer l'anomalie de la pression interne du moule (P).

10. Machine de moulage par injection (1) pour la mise en œuvre du procédé selon l'une quelconque des revendications 1 à 9,

dans lequel des anomalies dans un processus de production cyclique sont détectées ; dans lequel une pièce (14) est produite dans un cycle (Zk, k=1...1) du processus de production ; et dans lequel cycle (Zk, k=1...1) une pression interne (P) du moule est mesurée, dans lequel la pièce (14) est une pièce défectueuse (S) s'il y a une anomalie de la pression interne (P) du moule ;

dans lequel, dans une première étape (V1) du procédé, au moins une séquence chronologique de valeurs de pression (Xkj, k=1...1, j=1...m) pour au moins un cycle (Zk, k=1...1) est fournie ;

dans lequel, dans une deuxième étape (V2) du procédé, pour chaque séquence chronologique de valeurs de pression (Xkj, k=1...1, j=1...m) au moins une valeur caractéristique (Kki, k=1...1, i=1...n) est automatiquement déterminée ;

dans lequel, dans une troisième étape (V3) du procédé, la valeur caractéristique (Kki, k=1...1, i=1...n) pour une pluralité de cycles (Zk, k=1...1) est automatiquement partitionnée dans au moins un arbre de décision (Bi, i=1...n) et une profondeur moyenne (Ti, i=1...n) de l'arbre de décision (Bi, i=1...n) est automatiquement déterminée ;

dans lequel, dans une quatrième étape (V4) du procédé, une séquence chronologique d'autres valeurs de pression (Xj', j=1...m) dans un autre cycle (Z') est fournie ;

dans lequel, dans une cinquième étape (V5) du procédé, au moins une autre valeur caractéristique (Ki', i=1...n) est automatiquement déterminée pour la séquence chronologique d'autres valeurs de pression (Xj', j=1...m) ;

dans lequel, dans une sixième étape (V6) du procédé, l'autre valeur caractéristique (Ki', i=1...n) est automatiquement partitionnée dans au moins un autre arbre de décision (Bi', i=1...n) et une autre profondeur (Ti', i=1...n) de l'autre arbre de décision (Bi', i=1...n) est automatiquement déterminée ; et

dans lequel, dans une septième étape (V7) du procédé, il est automatiquement déterminé si, pour une valeur caractéristique (Kki, k=1...1, i=1...n) et une autre valeur caractéristique (Ki', i=1...n) ayant le même indice de valeur caractéristique (i), l'autre profondeur (Ti', i=1...n) de l'autre arbre de décision (Bi', i=1...n) est inférieure à la profondeur moyenne (Ti, i=1...n) de l'arbre de décision (Bi, i=1...n) et s'il y a une anomalie de la pression du moule (P) ;

**caractérisée en ce que** la machine de moulage par injection (1) comprend un capteur de pression, lequel capteur de pression génère une séquence chronologique de signaux de pression (PSkj, k=1...1, j=1...m) pour mettre en œuvre la première étape (V1) du procédé ; **en ce que** la machine de moulage par injection (1) comprend une unité convertisseuse (161), laquelle unité convertisseuse (161) convertit automatiquement la séquence chronologique de signaux de pression (PSkj, k=1...1, j=1...m) en une séquence chronologique de valeurs de pression (Xkj, k=1...1, j=1...m).

11. Machine de moulage par injection (1) selon la revendication 10, **caractérisée en ce que** ladite machine de moulage par injection (1) comprend au moins un ordinateur (162) ; **en ce que** ledit ordinateur (162) comprend au moins un processeur de données et au moins une mémoire de données ; **en ce qu'**au moins un programme d'ordinateur (C) est stocké dans la mémoire de données et peut être chargé dans le processeur de données ; **en ce que** le programme d'ordinateur (C) chargé dans le processeur de données amène l'ordinateur (162) à exécuter la deuxième étape (V2) du procédé, la troisième étape (V3) du procédé, la cinquième étape (V5) du procédé, la sixième étape (V6) du procédé et la septième étape (V7) du procédé.

```
┌─────────────────────────────────┐          Zk, k=1…l
│              V1                 │ ◀────    Xkj, k=1…l, j=1…m
└─────────────────────────────────┘
                 │
                 ▼
┌─────────────────────────────────┐          Xkj, k=1…l, j=1…m,
│              V2                 │ ◀────    Kki, k=1…l, i=1…n
└─────────────────────────────────┘
                 │
                 ▼
┌─────────────────────────────────┐          Kki, k=1…l, i=1…n,
│              V3                 │ ◀────    Bi, i=1…n,
└─────────────────────────────────┘          Ti, i=1…n
                 │
                 ▼
┌─────────────────────────────────┐          Z',
│              V4                 │ ◀────    Xj', j=1…m
└─────────────────────────────────┘
                 │
                 ▼
┌─────────────────────────────────┐          Xj', j=1…m,
│              V5                 │ ◀────    Ki', i=1…n
└─────────────────────────────────┘
                 │
                 ▼
┌─────────────────────────────────┐          Ki', i=1…n,
│              V6                 │ ◀────    Bi', i=1…n,
└─────────────────────────────────┘          Ti', i=1…n
                 │
                 ▼
┌─────────────────────────────────┐          Bi, i=1…n,
│              V7                 │ ◀────    Ti, i=1…n,
└─────────────────────────────────┘          Bi', i=1…n,
                                             Ti', i=1…n
```

**Fig. 1**

**Fig. 2**

PSkj, k=1...l, j=1...m

C, Mh,
Xkj, k=1...l, j=1...m,
Kki, k=1...l, i=1...n,
Xj', j=1...m,
Ki', i=1...n,
Bi, i=1...n, Ti, i=1...n,
Bi', i=1...n, Ti', i=1...n,
T+i, α, β, Si, i=1...n

161, 162, 163, 164

**Fig. 3**

Fig. 4

Fig. 5

Gki, k=1...l, i=1...n

E — B1i, i=1...n

Bi, i=1...n

B2i, i=1...n

E — B3i, i=1...n

E — B3i, i=1...n

B2i, i=1...n

B3i, i=1...n

E

E

B3i, i=1...n

E

B2i, i=1...n

B4i, i=1...n

Gki, k=1...l, i=1...n

B3i, i=1...n

T1, i=1...n

B4i, i=1...n

B4i, i=1...n

Gki, k=1...l, i=1...n

Gki, k=1...l, i=1...n

Fig. 6

EP 4 351 860 B1

Fig. 7

Fig. 8

|      | M1   | M2   | M3   | M4   | M5   | M6   | M7   |
|------|------|------|------|------|------|------|------|
| Kk1  | -1.0 | +0.4 | +0.4 | 0.0  | 0.0  | 0.0  | 0.0  |
| Kk2  | +0.4 | 0.0  | 0.0  | -1.0 | 0.0  | 0.0  | 0.0  |
| Kk3  | +0.8 | -0.2 | 0.0  | 0.0  | -0.2 | +0.2 | 0.0  |
| Kk4  | -0.6 | +0.2 | +0.2 | +0.4 | +0.2 | +0.2 | 0.0  |
| Kk5  | -0.6 | +0.2 | 0.0  | +0.2 | +0.2 | 0.0  | 0.0  |
| Kk6  | +0.2 | 0.0  | 0.0  | -0.8 | -0.8 | 0.0  | 0.0  |
| Kk7  | -0.8 | +0.2 | 0.0  | +0.2 | +0.6 | +0.4 | +0.2 |
| Kk8  | +1.0 | 0.0  | 0.0  | 0.0  | 0.0  | 0.0  | 0.0  |
| Kk9  | +0.4 | -0.2 | 0.0  | -0.2 | +0.8 | 0.0  | 0.0  |
| Kk10 | 0.0  | 0.0  | 0.0  | -0.2 | +0.6 | +0.4 | +0.2 |
| Kk11 | 0.0  | -0.2 | 0.0  | 0.0  | 0.0  | 0.0  | 0.0  |
| Kk12 | -0.8 | +0.2 | 0.0  | +0.2 | +0.6 | +0.4 | +0.2 |
| Kk13 | +0.2 | 0.0  | 0.0  | -0.8 | -0.8 | 0.0  | 0.0  |
| Kk14 | -0.6 | +0.2 | 0.0  | +0.2 | +0.2 | 0.0  | 0.0  |
| Kk15 | -0.8 | +0.2 | 0.0  | +0.2 | 0.0  | +0.4 | 0.0  |

Fig. 9

**IN DER BESCHREIBUNG AUFGEFÜHRTE DOKUMENTE**

**In der Beschreibung aufgeführte Patentdokumente**

- WO 2017144344 A1